(19) Europäisches Patentamt / European Patent Office / Office européen des brevets

(11) **EP 4 584 710 B1**

(12) **EUROPEAN PATENT SPECIFICATION**

(45) Date of publication and mention
of the grant of the patent:
**06.05.2026  Bulletin 2026/19**

(21) Application number: **23755101.5**

(22) Date of filing: **11.08.2023**

(51) International Patent Classification (IPC):
*H04L 9/32* (2006.01)      *G06F 21/64* (2013.01)
*G06Q 20/06* (2012.01)      *G06Q 20/38* (2012.01)
*H04L 9/00* (2022.01)      *G06Q 20/36* (2012.01)

(52) Cooperative Patent Classification (CPC):
**G06F 21/64; G06 20/065; G06Q 20/0655;
G06Q 20/3674; G06Q 20/389; H04L 9/3247;
H04L 9/3263; H04L 9/50;** H04L 2209/56

(86) International application number:
**PCT/EP2023/072295**

(87) International publication number:
**WO 2024/052052 (14.03.2024 Gazette 2024/11)**

(54) **BLOCKCHAIN-BASED TOKEN PROTOCOL**

AUF BLOCKCHAIN BASIERENDES TOKENPROTOKOLL

PROTOCOLE DE JETON BASÉ SUR UNE CHAÎNE DE BLOCS

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.09.2022  GB 202213102**

(43) Date of publication of application:
**16.07.2025  Bulletin 2025/29**

(73) Proprietor: **nChain Licensing AG
6300 Zug (CH)**

(72) Inventors:
• **PAUNOIU, Alexandru**
  **London W1W 8AP (GB)**
• **PAGANI, Alessio**
  **London W1W 8AP (GB)**

(74) Representative: **Page White Farrer
Bedford House
21a John Street
London WC1N 2BF (GB)**

(56) References cited:
**WO-A1-2021/250045     GB-A- 2 598 945**

**Description**

## TECHNICAL FIELD

The present disclosure relates to a methods of implementing a token protocol, and in particular to a methods relating to melting and minting tokens as part of the token protocol.

## BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain comprises a chain of blocks of data, wherein each block comprises one or more transactions. Each transaction, other than so-called "coinbase transactions", points back to a preceding transaction in a sequence which may span one or more blocks going back to one or more coinbase transactions. Coinbase transactions are discussed further below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at some nodes, and the publication of blocks can be achieved through the publication of mere block headers.

The transactions in the blockchain may be used for one or more of the following purposes: to convey a digital asset (i.e. a number of digital tokens), to order a set of entries in a virtualised ledger or registry, to receive and process timestamp entries, and/or to time-order index pointers. A blockchain can also be exploited in order to layer additional functionality on top of the blockchain. For example blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in more detail later. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction comprises one or more inputs and one or more outputs. Any spendable output comprises an element specifying an amount of the digital asset that is derivable from the proceeding sequence of transactions. The spendable output is sometimes referred to as a UTXO ("unspent transaction output"). The output may further comprise a locking script specifying a condition for the future redemption of the output. A locking script is a predicate defining the conditions necessary to validate and transfer digital tokens or assets. Each input of a transaction (other than a coinbase transaction) comprises a pointer (i.e. a reference) to such an output in a preceding transaction, and may further comprise an unlocking script for unlocking the locking script of the pointed-to output. So consider a pair of transactions, call them a first and a second transaction (or "target" transaction). The first transaction comprises at least one output specifying an amount of the digital asset, and comprising a locking script defining one or more conditions of unlocking the output. The second, target transaction comprises at least one input, comprising a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

## SUMMARY

The invention is defined in the independent claims. Particular embodiments are set out in the dependent claims.

In the modern world, cash still plays a crucial role for the economy in several areas of the world and in a variety of markets. Cash provides instant peer-to-peer transactions without central authorities, guaranteeing the privacy of all the involved parties. Moreover, cash can be used for transactions even when one or more parties do not hold or have access to a bank account. However, as technology advances, traditional paper-based cash is becoming more and more obsolete, and new forms of cash are needed. Blockchain-based cash, referred to as *digital cash,* that can be exchanged digitally e.g., using a smartphone, is seen as an alternative to traditional cash. Digital cash has all the properties of traditional cash and is minted and backed by a trusted central authority e.g., a central bank. However, instead of being printed on paper, it is published on a blockchain. Blockchain-based digital cash can be exchanged peer-to-peer, either online or offline i.e., with or without internet connection.

However, blockchain-based digital cash (and other token protocols) faces several challenges. One of those challenges is how to validate a most recent token transaction, e.g. so as to be able to accept that the tokens in the token transaction.

According to one aspect disclosed herein, there is provided a computer-implemented method of performing a token protocol using a blockchain, wherein a token transfer transaction requires an input signed by a respective party and one or more respective outputs, each respective output locking a respective amount of a digital asset and comprising a respective locking script locked to a respective public key of a respective party and comprising a respective token amount, and wherein the method is performed by a delegated entity and comprises: obtaining a token melt transaction, wherein the token melt transaction comprises i) a first input signed by a first party, wherein the first input references a respective output of a first token transfer transaction, wherein the respective output is locked to a first public key of the first party and comprises a first token amount, and ii) a first output locked to a melting public key of the delegated entity and comprising the first token amount; creating a token mint transaction, wherein the token mint transaction comprises i) a respective input signed by the delegated entity using a signature corresponding to a minting public key, and ii) a respective output locking a respective amount of the digital asset sufficient to fund one or more respective token transfer transactions, wherein the respective output is locked to a second public key of the first party and comprises the first token amount; and causing the token mint transaction to be submitted to one or more nodes of a blockchain network.

According to one aspect disclosed herein, there is provided a computer-implemented method of performing a token protocol using a blockchain, wherein each token transfer transaction requires an input signed by a respective party and one or more respective outputs, each respective output locking a respective amount of a digital asset and comprising a respective locking script locked to a respective public key of a respective party and comprising a respective token amount, and wherein the method is performed by a first party and comprises: initiating a melt and mint protocol, wherein the melt and mint protocol comprises: creating a token melt transaction, wherein the token melt transaction comprises i) a first input signed by the first party, wherein the first input references a respective output of a first token transfer transaction locked to a first public key of the first party and comprises a first token amount, and ii) a first output locked to a melting public key of a delegated entity and comprising the first token amount; causing the token melt transaction to be submitted to one or more nodes of a blockchain network; obtaining a token mint transaction, wherein the token mint transaction comprises i) a respective input signed by the delegated entity using a signature corresponding to a minting public key, and ii) a respective output locking a respective amount of the digital asset sufficient to fund one or more respective token transfer transactions, wherein the respective output is locked to a second public key of the first party and comprises the first token amount.

Embodiments of the present disclosure relate to a "melt and mint protocol" that reduces the number of checks that have to be performed in order to validate tokens. Tokens can be "melted" (i.e. removed from the token protocol such that they cannot be used) at certain checkpoints and minted (i.e. re-issued, or re-introduced into the token protocol). This means that- tokens do not have to be traced back to issuance in order to be validated. The delegated entity is responsible for minting tokens in response to a melt request. Since the interaction of such delegated entities can create bottlenecks, e.g. during peak times, the protocol aims to minimise the role of delegated entities in the token transactions without completely removing them. Delegated entities only have to check the validity of tokens between two transactions (having checkpoint roles) which are referred to as melt and mint transactions.

## BRIEF DESCRIPTION OF THE DRAWINGS

To assist understanding of embodiments of the present disclosure and to show how such embodiments may be put into effect, reference is made, by way of example only, to the accompanying drawings in which:

Figure 1 is a schematic block diagram of a system for implementing a blockchain,

Figure 2 schematically illustrates some examples of transactions which may be recorded in a blockchain,

Figure 3 shows a sequence diagram of an example token issuance protocol,

Figure 4 is a schematic block diagram of an example system for implementing a melt and mint protocol,

Figure 5 shows an example chain of transactions from a mint transaction to a melt transaction,

Figure 6 is a schematic block diagram of an example system for transferring and validating a token transaction,

Figure 7 shows an example payment tree of transactions, starting from mint transactions and ending with a current token transaction,

Figure 8 is a schematic block diagram of an example system for submitting token transactions to a blockchain,

Figure 9 shows an example sequence of token transactions, including double-spending of a token, and

Figure 10 shows an example spending graph for a chain of transactions.

## DETAILED DESCRIPTION OF EMBODIMENTS

### 1. EXAMPLE SYSTEM OVERVIEW

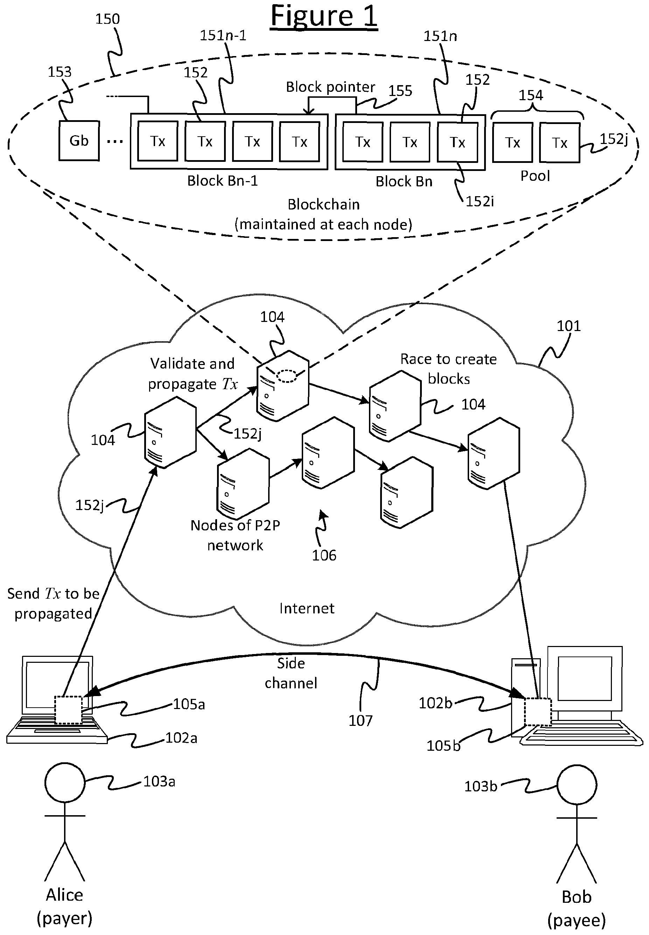

Figure 1 shows an example system 100 for implementing a blockchain 150. The system 100 may comprise a packet-switched network 101, typically a wide-area internetwork such as the Internet. The packet-switched network 101 comprises a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 comprises computer equipment of a peer, with different ones of the nodes 104 belonging to different peers. Each blockchain node 104 comprises processing apparatus comprising one or more processors, e.g. one or more central processing units (CPUs), accelerator processors, application specific processors and/or field programmable gate arrays (FPGAs), and other equipment such as application specific integrated circuits (ASICs). Each node also comprises memory, i.e. computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 comprises a chain of blocks of data 151, wherein a respective copy of the blockchain 150 is maintained at each of a plurality of blockchain nodes 104 in the distributed or blockchain network 106. As mentioned above, maintaining a copy of the blockchain 150 does not necessarily mean storing the blockchain 150 in full. Instead, the blockchain 150 may be pruned of data so long as each blockchain node 150 stores the block header (discussed below) of each block 151. Each block 151 in the chain comprises one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 comprises at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also comprises a block pointer 155 pointing back to the previously created block 151 in the chain so as to define a sequential order to the blocks 151. Each transaction 152 (other than a coinbase transaction) comprises a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set (or "pool") 154 of transactions 152 waiting to be incorporated into blocks 151. The ordered pool 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input comprises a pointer referencing the output of a preceding transaction 152i in the sequence of transactions, specifying that this output is to be redeemed or "spent" in the present transaction 152j. Spending or redeeming does not necessarily imply transfer of a financial asset, though that is certainly one common application. More generally spending could be described as consuming the output, or assigning it to one or more outputs in another, onward transaction. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also comprises the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when a party 103, such as an individual user or an organization, wishes to enact a new transaction 152j (either manually or by an automated process employed by the party), then the enacting party sends the new transaction from its computer terminal 102 to a recipient. The enacting party or the recipient will eventually send this transaction to one or more of the blockchain nodes 104 of the network 106 (which nowadays are typically servers or data centres, but could in principle be other user terminals). It is also not excluded that the party 103 enacting the new transaction 152j could send the transaction directly to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may comprise checking that the cryptographic signature or other authorisation of the party 103 included in the input of the new transaction 152j matches a condition defined in the output of the preceding transaction 152i which the new transaction spends (or "assigns"), wherein this condition typically comprises at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned (or "spent") is whether it has yet been validly redeemed by the input of another, onward transaction 152j according to the blockchain node protocol. Another condition for a transaction to be valid is that the output of the preceding transaction 152i which it attempts to redeem has not already been redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered pool 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this comprises searching for a "nonce" value such that when the nonce is concatenated with a representation of the ordered pool of pending transactions 154 and hashed, then the output of the hash meets a predetermined condition. E.g. the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. The significant amount of effort, for example in the form of hash, required to create a proof-of-work solution signals the intent of the first node 104 to follow the rules of the blockchain protocol. Such rules include not accepting a transaction as valid if it spends or assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the pool of yet-to-be published transactions 154 at any given time, depending on when they started searching for a solution or the order in which the transactions were received. Whoever solves their respective puzzle first defines which transactions 152 are included in the next new block 151n and in which order, and the current pool 154 of unpublished transactions is updated. The blockchain nodes 104 then continue to race to create a block from the newly-defined ordered pool of unpublished transactions 154, and so forth. A protocol also exists for resolving any "fork" that may arise, which is where two blockchain nodes104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to newly assign an additional, accepted amount of the digital asset in a new special kind of transaction which distributes an additional defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction" or "generation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server comprising one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network 106 but do not participate in validating transactions or constructing blocks. Some of these users or agents 103 may act as senders and recipients in transactions.

Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network 106; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second party" respectively.

The computer equipment 102 of each party 103 comprises respective processing apparatus comprising one or more processors, e.g. one or more CPUs, GPUs, other accelerator processors, application specific processors, and/or FPGAs. The computer equipment 102 of each party 103 further comprises memory, i.e. computer-readable storage in the form of a non-transitory computer-readable medium or media. This memory may comprise one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software comprising a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 comprises at least one user terminal, e.g. a desktop or laptop computer, a tablet, a smartphone, or a wearable device such as a smartwatch. The computer equipment 102 of a given party 103 may also comprise one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 comprises at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality comprises collating the amounts defined in the outputs of the various 152 transactions scattered throughout the blockchain 150 that belong to the party in question.

Note: whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This comprises first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered pool of pending transactions 154 maintained at a given blockchain node 104, that blockchain node 104 will start competing to solve the proof-of-work puzzle on the latest version of their respective pool of 154 including the new transaction 152 (recall that other blockchain nodes 104 may be trying to solve the puzzle based on a different pool of transactions 154, but whoever gets there first will define the set of transactions that are included in the latest block 151. Eventually a blockchain node 104 will solve the puzzle for a part of the ordered pool 154 which includes Alice's transaction 152j). Once the proof-of-work has been done for the pool 154 including the new transaction 152j, it immutably becomes part of one of the blocks 151 in the blockchain 150. Each transaction 152 comprises a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

## 2. UTXO-BASED MODEL

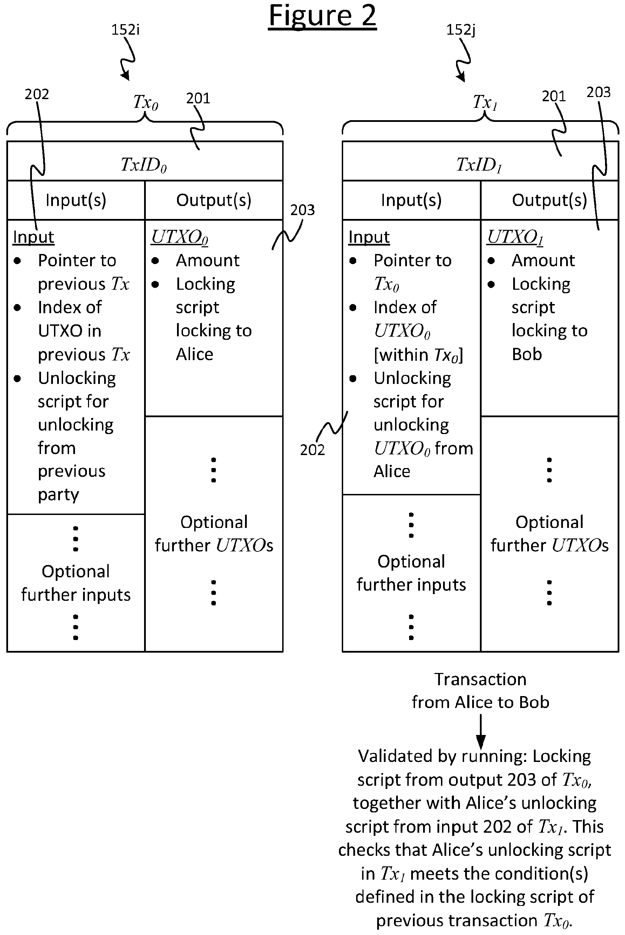

Figure 2 illustrates an example transaction protocol. This is an example of a UTXO-based protocol. A transaction 152 (abbreviated "Tx") is the fundamental data structure of the blockchain 150 (each block 151 comprising one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 comprises a data structure comprising one or more inputs 202, and one or more outputs 203. Each output 203 may comprise an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also comprise a header 201, which may comprise an indicator of the size of the input field(s) 202 and output field(s) 203. The header 201 may also include an ID of the transaction. In embodiments the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point

back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction Txocomprises a particular UTXO, labelled here $UTXO_0$. Each UTXO comprises a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). I.e. the locking script defines an unlocking condition, typically comprising a condition that the unlocking script in the input of the subsequent transaction comprises the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of Txocomprises a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ comprises a pointer pointing back to $Tx_1$ (e.g. by means of its transaction ID, $TxID_0$, which in embodiments is the hash of the whole transaction $Tx_0$). The input 202 of $Tx_1$ comprises an index identifying $UTXO_0$ within $Tx_0$, to identify it amongst any other possible outputs of $Tx_0$. The input 202 of $Tx_1$ further comprises an unlocking script <Sig $P_A$> which comprises a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This comprises running the locking script and unlocking script together to check whether the unlocking script meets the condition defined in the locking script (where this condition may comprise one or more criteria). In embodiments this involves concatenating the two scripts:

<Sig $P_A$> <$P_A$> || [Checksig $P_A$]

where "| |" represents a concatenation and "<...>" means place the data on the stack, and "[...]" is a function comprised by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data comprises the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically comprises hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered pool of pending transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However the amount from the UTXO can be split between multiple outputs of the next transaction. E.g. the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node 104 that successfully includes her transaction 104 in a block 151. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. E.g. say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned (or spent) by the node 104 that wins the proof-of-work race to create the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence typically, the assets of a given party 103 are scattered throughout the UTXOs of various transactions 152 throughout the blockchain 150.

There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. E.g. the data could comprise a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically comprises the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed comprises authenticating a signature. More generally the scripting language could be used to define any one or more conditions. Hence the more general terms "locking script" and "unlocking script" may be preferred.

3. SIDE CHANNEL

As shown in Figure 1, the client application on each of Alice and Bob's computer equipment 102a, 120b, respectively, may comprise additional communication functionality. This additional functionality enables Alice 103a to establish a separate side channel 107 with Bob 103b (at the instigation of either party or a third party). The side channel 107 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 107 may be used to exchange any other transaction related data, such as keys, negotiated amounts or terms, data content, etc.

The side channel 107 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 107 as referred to anywhere herein may comprise any one or more links via one or more networking technologies or communication media for exchanging data "off-chain", i.e. separately from the blockchain network 106. Where more than one link is used, then the bundle or collection of off-chain links as a whole may be referred to as the side channel 107. Note therefore that if it is said that Alice and Bob exchange certain pieces of information or data, or such like, over the side channel 107, then this does not necessarily imply all these pieces of data have to be send over exactly the same link or even the same type of network.

4. TOKENS

A token may be defined as a unit of value issued by a (trusted) organisation. A token may be used to represent and manage real world assets. Herein, a token is different to the underlying digital asset of the blockchain, e.g. Satoshis / bitcoin. Tokens are issued and transferred using blockchain transactions, however, the value (e.g. in satoshis) of the transaction does not need to replicate the value of the tokens embedded (e.g. a transaction moving a few satoshis can transfer an arbitrary amount of tokens). Tokens can be managed and validated using trusted third-party services and/or the blockchain's native scripting language. In the latter case, smart contracts, which may be used to regulate the tokens, may be seen as stateful smart contracts, where the transaction state contains the amount of tokens available.

Tokens may be permissioned or permissionless. Permissioned tokens are controlled by a central authority (e.g. a government or a trusted institution) or a group of pre-approved entities, who are in charge of issuance, management, freezing and other operations. On the contrary, permissionless tokens are a class of tokens where no one can control their exchange. Anyone can issue a permissionless token and their circulation cannot be controlled.

4.1 Token validity

Bitcoin is an example of a UTXO-based blockchain 150. Therefore a new transaction output (UTXO) is created every time one or more tokens are transferred from a public key to another. The validity of native tokens (e.g. bitcoin) is verified by the blockchain network 106 every time there is a new transaction. However, when new tokens are minted and embedded in UTXOs, they are not automatically validated by the nodes 104 and therefore need additional verification.

A token scheme on top of the blockchain 150 is a distinguished set of digital assets that are issued at a particular time and follow a particular ruleset for assignation. Tokens are issued by a trusted party known as the issuer. It can be assumed that all parties are able to identify a newly minted token from the issuer. If a token has followed all the rules since issuance, then it may be considered valid at present. A key challenge facing token schemes is how to know a token is valid at present. It is often beneficial to think of a token validity check as being carried out in two steps.

1. Was the token ever valid? This typically occurs when a user receives a token.
2. Is the token valid at present? This typically occurs when a user spends a token.

In terms of the user journey, the first step is important if they are about to receive a token - they would like to know whether the token is authentic. The second part is important once the user is in possession of the token - they would like to know that it hasn't been double-spent.

Consider the analogy with the blockchain itself. A native blockchain token is a UTXO. In this case, point 1 corresponds to a Merkle proof of the previous transaction, and point 2 corresponds to the acceptance of the transaction containing the UTXO in the blockchain network 106.

Another approach for token management is using accounts. In this case, instead of embedding tokens within UTXOs, the amount held by each user is stored in a contract that keeps tracks of all the balances and provide token transfer functionalities. This approach is the preferred solution for blockchains that allow to maintain a state e.g., Ethereum ERC20 tokens. However, it is rarely used in UTXO-based blockchains as the state would need to be maintained within the UTXOs, centralising the protocol and generating large transactions.

4.2 Tracing back

Some token protocols involve a so-called "tracing back" method to check whether a token is valid. Tracing back is a technique used by token protocols that set up a token ruleset and require users to ensure that they follow the ruleset. The challenge is that the only way to check a token was ever valid is to trace it back to issuance. Often such protocols suggest that wallet software may be responsible for tracking the validity of tokens. But here is it not clear what happens if one circumvents the wallet software. Another challenge is that in such protocols it is easy to burn tokens if one creates a token transaction that doesn't follow token rules.

4.3 Dust limit

The dust limit *dust* prevents transactions with very low value from being published on the blockchain 150. The reason for having a dust limit is that under the standard fee policies, very low value output would require a higher fee to spend than the value of the output itself, making these transactions uneconomical to spend (the cost of the unlocking script would be higher than the UTXO value).

Another reason for setting a dust limit is to prevent dusting attacks. Dusting attacks are used by scammers to deanonymize transactions, revealing individuals or organizations behind a wallet. Scammers can "dust" a large number of addresses, wait for wallets to spend these dust outputs and then perform analysis to reveal which of these addresses belong to the same wallet.

5. MELT AND MINT PROTOCOL

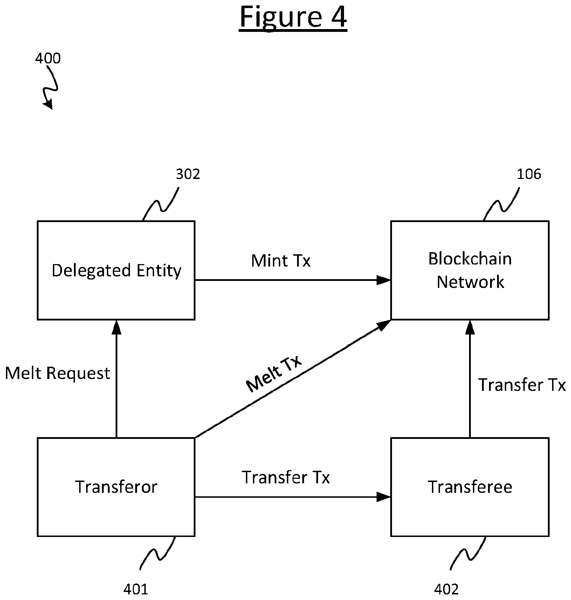

Figure 4 illustrates an example system 400 for implementing a melt and mint protocol as part of a token protocol, e.g. a token protocol that having some or all of the features described in section 4 and/or section 8. For instance, the token protocol may be a protocol for implementing a digital cash system. The system 400 includes one or more delegated entities 302, a transferor (or payer) 401, a transferee (or payee) 402, and one or more nodes 104 of a blockchain network 106. The transferor and transferee may also be referred to as the first party and second party, respectively. The transferor 401 may be configured to perform some or all of the actions attributed to Alice 103a and/or Bob 103b with reference to Figures 1 and 2. Similarly, the transferee 402 as described above. The transferee may be configured to perform some or all of the actions attributed to Alice 103a and/or Bob 103b with reference to Figures 1 and 2.

As will be described below, the delegated entity 302 is responsible for minting (i.e. issuing, or rather, re-issuing) new tokens in response to a melt request from a token user, e.g. the transferor 401. The transferor is a token user that intends to transfer an amount of tokens to a transferee 402, where the transferee is the recipient of the amount of tokens. Here, transferring tokens means transferring ownership of the tokens to the transferee 402.

Blockchain transactions that transfer ownership of tokens are referred to herein as token transfer transactions, or simply transfer transactions. According to the token protocol described herein, a transfer transaction may be required to satisfy one or more of the following conditions in order to be deemed a valid transfer transaction. A first one of the conditions is that it must include at least one input signed by the transferor 401. A transfer transaction may include more than one input signed by the transferor 401. Each input of the transfer transaction must reference an output of a previous transfer transaction, or an output of a mint transaction. Mint transactions will be described below.

A second one of the conditions is that the transfer transaction must include one or more outputs, where each output is locked to a respective public key of a token user, e.g. the transferee 402. One or more outputs may be locked to the transferor 401. Each output contains a respective token amount defining the amount of tokens being transferred (assigned) to the owner of the respective public key to which the output is locked. The token amount may be included as a string or otherwise. In some examples, the token amount is included in a portion of the output (specifically, the locking script of the output) that is not executed during script execution. E.g. the token amount may follow an OP_RETURN opcode or an equivalent.

A third one of the conditions is that the sum of the token amounts across the outputs of the transfer transaction must be equal to the sum of the token amounts included in the outputs of the previous transfer or mint transactions that are referenced by the inputs of the current transfer transaction. As an example, if the current transfer transaction referencing a single output that includes 50 tokens, then the sum of the tokens included in the outputs of the current transfer transaction must also be 50 tokens, e.g. the current transfer transaction may include five outputs, each including 10 tokens.

Each output of the transfer transaction locks a respective amount of the underlying digital asset of the blockchain 150. The underlying asset is different from the tokens. The token amounts are added as data in the locking scripts of transaction's outputs, whereas the underlying digital asset are fundamental to the transaction and required by the blockchain protocol. Taking Bitcoin as an example, the underlying asset is a unit known as a satoshi. A fourth one of the conditions is that each token output of the transfer transaction (a token output being an output containing a token amount) must lock a sufficient amount of the underlying asset. The sufficient amount may be a predetermined amount. The sufficient amount may be a fixed amount, or a minimum amount. In some examples, the sufficient amount may be a proportion (i.e. fraction) of the amount of underlying asset locked by the output(s) referenced by the input(s) of the previous transfer transaction(s).

A transfer transaction may have to satisfy one or more further conditions in order to be deemed valid. These further conditions are discussed below.

In response to determining that the transferor 401 cannot generate a valid transfer transaction due to an insufficient amount of the digital asset to create more than one token transaction, the transferor 401 may initiate a melt and mint protocol with a delegated entity 302. Initiating the melt and mint protocol may comprises sending a request to the delegated entity 302. The transferor 401 has an insufficient amount of the digital asset if the output(s) of a current token transaction together lock less than the sufficient amount required to be locked by a respective output of more than one transfer transaction. The transferor has at least an amount of the digital asset that is sufficient to create a melt transaction (i.e. one token transaction), but less than the amount of digital asset required to create two token transactions (e.g. two transfer transactions).

The transferor 401 generates a melt transaction. The melt transaction comprises an input that references an output of the most recent transfer transaction, where the output is locked to a first public key associated with the transferor 401. The input is signed with a signature generated using a first private key corresponding to the first public key. The referenced output comprises a first token amount, e.g. 40 tokens. The melt transaction comprises an output locked to a melting public key associated with the delegated entity 302. The output of the melt transaction comprises the first token amount, e.g. 40 tokens. That is, the melt transaction melts the transferor's existing tokens. Here, melting the tokens effectively means transferring the tokens to the delegated entity 302 such that they are no longer available for use by token users. The transferor 401 submits the melt transaction to the blockchain network 106 directly or via an intermediate party, e.g. the delegated entity 302.

The delegated entity 302 obtains the melt transaction. For example, the delegated entity 302 may obtain the melt transaction from the blockchain 150 and/or the delegated entity may receive the melt transaction from the transferor 401.

The delegated entity 302 generates a mint transaction. The mint transaction comprises an input signed with a signature generated using a private key corresponding to a minting public key associated with the delegated entity 302. The minting public key may be the same as or different compared to the melting public key. In some examples, the input of the mint transaction references the output of the melt transaction. In other examples, to preserve privacy, the input of the mint transaction does not reference the output of the melt transaction. The mint transaction comprises an output locked to a second public key associated with the transferor 401. The second public key may be the same as or different compared to the delegated entity 302. Using a different public key preserves privacy. The delegated entity 302 may receive the second public key from the transferor 402. The output of the mint transaction comprises the first token amount, i.e. the mint transaction mints the same number of tokens which are melted by the melt transaction. The output of the mint transaction locks an amount of the digital asset that is sufficient to fund (i.e. create) one or more further transfer transactions. The amount of the digital asset that is locked may be predetermined. The amount may be fixed, i.e. each mint transaction locks the same amount of the digital asset. The delegated entity 302 submits the mint transaction to the blockchain network 106 directly or via an intermediate party, e.g. the transferor 401.

The transferor 401 obtains the mint transaction. For example, the transferor 401 may obtain the mint transaction from the blockchain 150 and/or the transferor 401 may receive the mint transaction from the delegated entity 302. Having obtained the mint transaction, the transferor 401 may generate a next transfer transaction that transfers some or all of the first token amount to the transferee 402. That is, the transferor 401 may generate a token transaction the comprises an input referencing the output of the mint transaction and signed with a signature generated using a private key corresponding to the second public key. The token transaction includes one or more outputs, each containing a respective token amount. A sum of the token amounts is equal to the first token amount. At least one of the outputs comprises a second token amount and is locked to a public key associated with the transferee 402. Furthermore, each output locks the sufficient amount of the digital asset. The transferor 401 submits the token transaction to the blockchain network 106 directly or via an intermediate party, e.g. the delegated entity 302 or the transferee 402.

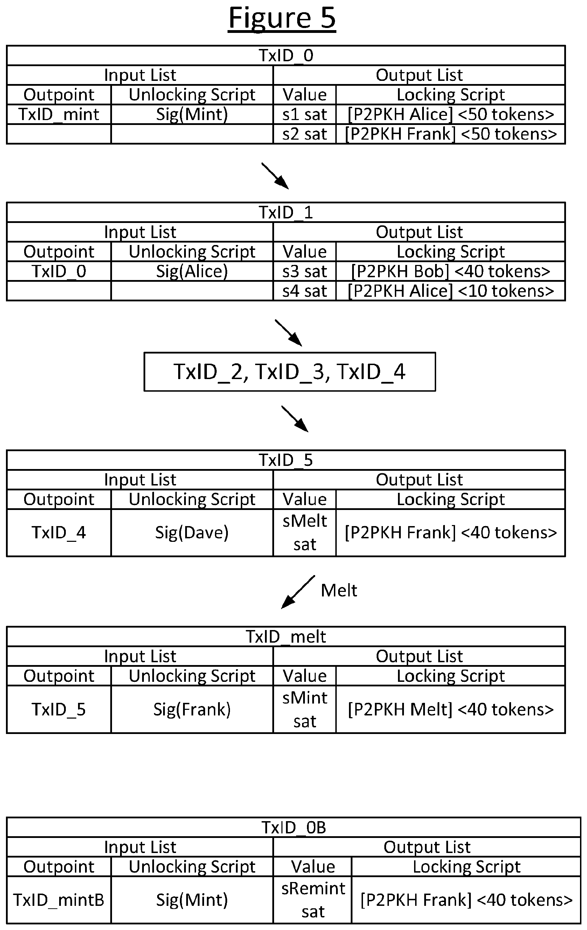

Figure 5 illustrates an example melt and mint protocol. From top to bottom, the topmost transaction shows an example mint transaction signing with a minting signature and having two token outputs, one locked to Alice's public key and one locked to Frank's public key. Both Alice and Frank are issued with 50 tokens. The next transaction then shows Alice transferring 40 tokens to Bob, returning 10 tokens to herself. Several transactions later, Dave transfers 40 tokens to Frank. Frank is not able to then generate a token transaction due to insufficient funds so initiates the melt and mint protocol by generating a melt transaction. The melt transaction is signed by Frank and locks the 40 tokens to a melting public key.

The delegated entity 302 then mints 40 tokens using a minting transaction and locks these to Frank's public key.

In some examples, in response to receiving the request from the transferor 401, the delegated entity 302 may send a digital certificate to the transferor 401, where the digital certificate comprises the melting public key. The certificate certifies that the melting public key is controlled by the delegated entity 302. The transferor 401 may use the certificate to generate the melt transaction, e.g. by extracting the melting public key. In some examples, the transferor 402 may verify that the digital certificate is a valid certificate, and only proceed with the melt and mint protocol if the certificate is valid. Validating the certificate may comprise verifying that the certificate has not been revoked. The skilled person will be familiar with how to verify that a digital certificate is valid. Proceeding with the melt and mint protocol may comprise generating the melt transaction.

The delegated entity 302 may verify the transferor's identity before proceeding with the melt and mint protocol. Proceeding with the melt and mint protocol may comprise generating the mint transaction. In some examples, to verify the identify of the transferor 401, the transferor 401 may send a digital certificate to the delegated entity, where the certificate comprises an identity public key associated with the transferor 401. In some examples, the certificate may be publicly accessible. The certificate certifies that the identity public key is controlled by the transferor 401. The transferor 401 may sign the certificate with a signature generated using a private key corresponding to an ephemeral public key. The delegated entity 302 may verify that the identity public key is based on (i.e. linked to, or derivable from) the first public key and the ephemeral key.

In some examples, the delegated entity 302 may, before proceeding with the melt and mint protocol, verify that the melt transaction generated by the transferor 401 is part of a chain of token transaction that traces back to one or more mint transactions.

In some examples, the delegated entity 302 may only proceed with the melt and mint protocol upon determining that the melt transaction is a valid token transaction. Validating a token transaction is described in section 6 below. The delegated entity 302 may use some or all of the techniques described in section 6 to validate the mint transaction.

## 6. TOKEN TRANSFER AND VALIDATION

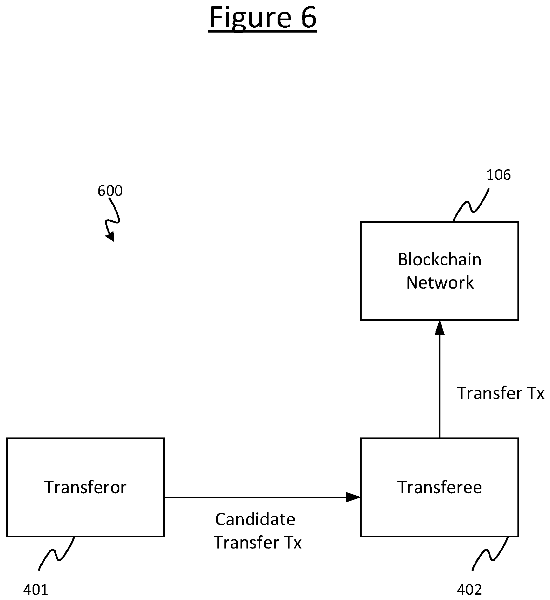

Figure 6 illustrates an example system 600 for implementing a transfer (e.g. payment) and validation protocol as part of a token protocol, e.g. a token protocol that having some or all of the features described in section 4 and/or section 8. For instance, the token protocol may be a protocol for implementing a digital cash system. The transfer and validation protocol may be used in conjunction with, or separate from, the melt and mint protocol described in section 5. For example, the delegated entity 302 may use the validation protocol to validate the melt transaction. The transferor 401 may use the transfer protocol to transfer tokens from the mint transaction. The transferee 402, as will be described, may use the validation protocol to validate a transfer transaction generated by the transferor 401.

When transferring tokens as part of the token protocol, the transferor 401 may generate a "candidate" transfer transaction. The candidate transfer transaction is a transfer transaction that is to be submitted to the blockchain network 106 once validated by the transferee 402. In some examples there may be no difference between the candidate transfer transaction received by the transferee 402 and the corresponding transfer transaction that is sent to the blockchain network 106, in which case the term "candidate" is merely used as a label for the transaction that is sent by the transferor 401.

The candidate transfer transaction has at least one input signed by the transferor 401 and referencing an output of a previous token transaction (either a previous transfer transaction or a mint transaction). The candidate transfer transaction may have more than one input, each referencing a respective token output. A transaction is a mint transaction if it is signed with a minting signature generated by a delegated entity 302. Each referenced output includes a respective token amount. The candidate transfer transaction has at least one output locked to a public key of the transferee 402. The candidate transfer transaction may have more than one output. Each output contains a respective token amount. A sum of the token amounts included in the outputs of the candidate transfer transaction must be equal to a sum of the token amounts included in the outputs referenced by the inputs of the candidate transfer transaction. Each output locks a respective amount of the underlying digital asset.

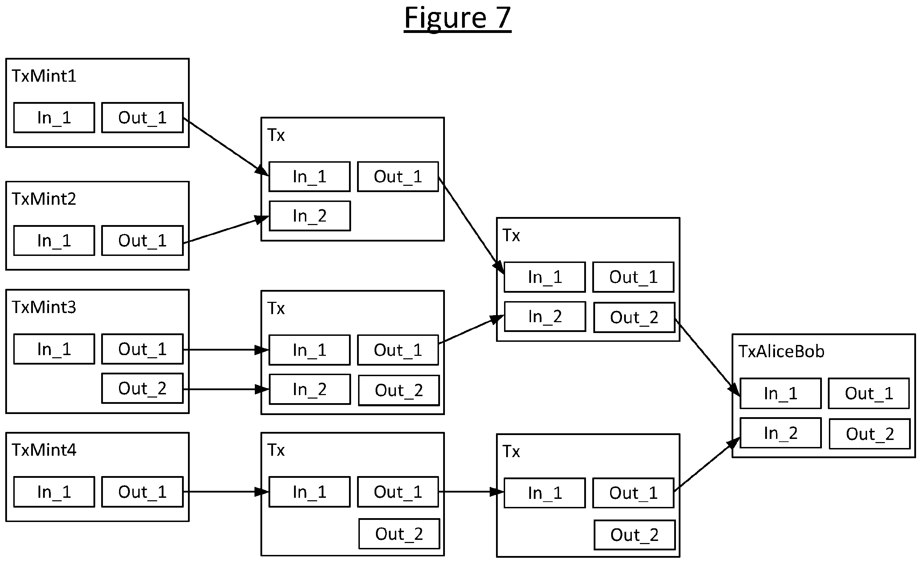

The transferor 401 sends the candidate transfer transaction to the transferee 402. The transferor 401 also sends one or more lists to the transferee 402, one per input of the candidate transfer transaction. Each list contains the transactions that trace back from the candidate transfer transaction, via the transaction referenced by a respective input, to one or more respective mint transactions. For example, referring to Figure 7 and taking TxAliceBob as an example of a candidate transfer transaction, one list would contain each transaction in the chain of transactions tracing back from the TxAliceBob to mint transactions TxMint1 and TxMint2 via input IN_1. Another list would contain each transaction in the chain of transactions tracing back from the TxAliceBob to mint transactions TxMint3 and TxMint4 via input IN_2. Note that the lists may be sent together as one overall list. The list(s) may contain references to the transactions, e.g. their respective transaction identifiers, or the list may contain the transactions themselves.

As mentioned, each mint transaction is signed with a respective minting signature corresponding to a respective minting public key. The transferor 401 may also send to the transferee 402 a respective certificate that certifies each minting public key as being associated with a respective delegated entity.

The transferee 402 uses a validation protocol to validate the candidate transfer transaction. The delegated entity 302 may also use the validation protocol to validate the melt transaction described in the section above.

The transferee 402 receives the candidate transfer transaction and the list(s) of transactions tracing back from the candidate transfer transaction to the mint transaction(s). The transferee 402 uses the list(s) to verify that each input of the candidate transfer transaction traces back to respective mint transactions. The transferee 402 also verifies that the sum of token amounts included in the outputs of the candidate transfer transaction is equal to the sum of token amounts included in the outputs of the transactions referenced by the inputs of the candidate transfer transaction. Both verifications must pass in order for the candidate transfer transaction to be deemed valid.

Upon determining that the candidate transfer transaction is a valid token transaction, the transferee 402 may submit that the candidate transfer transaction (at this point referred to as a transfer transaction) to the blockchain network 106, either directly or indirectly.

The candidate transfer transaction may be subject to one or more additional checks in order to be deemed valid, as will now be described. For instance, the transferee 402 may verify that each mint transaction is signed with a signature corresponding to a respective minting public key controlled by a respective delegated entity 302. The transferee 402 may use the certificates received from the transferor to perform this verification. The transferee 402 may additionally check that the certificates are valid.

In some examples, the transferee may verify that the candidate transfer transaction has enough transaction fees to ensure that the candidate transfer transaction does not get sent to a secondary mempool of a blockchain node 104. Transactions are gathered in the secondary mempool (or secondary transaction pool) if they do not include a minimum transaction fee. This can prevent a transaction from being recorded on the blockchain 150. Transaction fees are not typically explicitly specified in a transaction. Instead, the transaction fee is the difference between the sum of the amounts of the digital asset locked by respective outputs of the transaction, and the sum of the amounts of the digital asset locked by the respective outputs referenced by the respective inputs of the transaction. The transferee 401 may verify that the transaction fee is at least a predetermined minimum value.

In some examples, the candidate transfer transaction may only be deemed valid if each transaction in the chain(s) of transactions tracing back to the mint transaction(s) is also valid. The transferee 402 may therefore verify that each transaction in the chain(s) of transactions is also valid.

As discussed, the delegated entity 302 may use the validation protocol to validate a melt transaction. The delegated entity 302 performs steps equivalent to those described as being performed by the transferee 402, where the candidate transfer transaction is instead a melt transaction.

7. SUBMITTING TRANSACTIONS TO THE BLOCKCHAIN

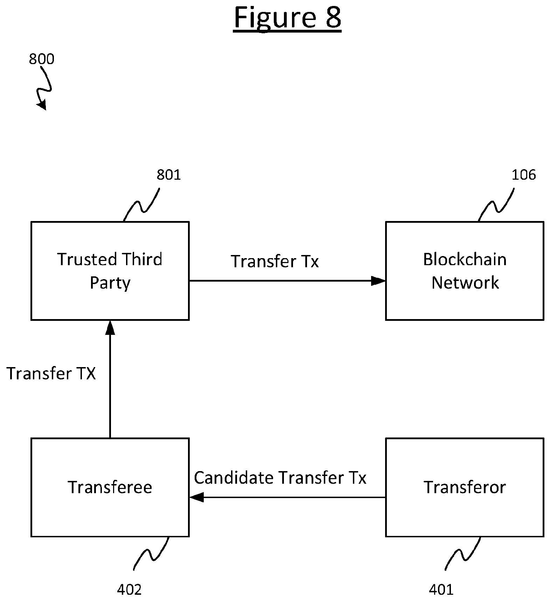

Figure 8 illustrates an example system 800 for facilitating the submission of transactions to the blockchain network 106. The system 800 comprises a first party, a second party, a third party and one or more nodes 104 of a blockchain network 106. The first party and second party may be, respectively, the transferor 401 and transferee 402 as described with reference to Figures 4 to 7. The third party may be a trusted third party 801.

The first party 401 may operate a device that is not able to (i.e. is not configured to) connect to (i.e. send data to) the blockchain network 106. In that case, the first party 401 may be unable to submit transactions to the blockchain network 106. As an example, the first party may be unable to connect to the blockchain network 106 via the internet. The first party 401 may be unable to connect to the blockchain network 106 at all (e.g. the device does not have the capability), or the first party 401 may be temporarily unable to connect to the network 106 (e.g. due to lack of coverage in the region in which the first party 401 is located). The transactions may relate to any purpose or protocol, e.g. the token protocol described herein. This prevents the first party 401 from utilising the blockchain. The third party 801 does operate a device that is able to (i.e. configured to) connect to (i.e. send data to) the blockchain network 106.

The first party 401 operates a device that is able to send data to the third party 801. Similarly, the third party 801 operates a device that is able to receive data from the first party. The first party 401 sends a first message to the third party 801, wherein the message comprises data for generating a transaction. The third party 801 receives the first message and generates a first transaction based on the message. In some examples, the message comprises at least some of the transaction. In other examples, the first message comprises the complete transaction. The message is send over a first connection. The first connection may be a radio connection. That is, the first party 401 may send the message over a radio connection. For example, the message may be sent over a mobile (cellular) connection such as General Packet Radio Services (GPRS). The message may be sent via Short Message Service (SMS) or Multimedia Messaging Service (MMS). Other types of radio connection that may be used include a Bluetooth connection, a near-field communication (NFC) connection, as well as low frequency radio (Tetra).

The third party 801 sends the first transaction, based on the first message, to the blockchain network 106 over a second connection. The second connection is different to the first connection. The second connection may be a packet-switched network 101, typically a wide-area internetwork such as the Internet. The third party 801 may translate the first message into the first transaction. That is, the first party 801 may generate the first transaction using the data (e.g. one or more signatures, one or more public keys, one or more token amounts, etc.) included in the first message.

In some examples, the third party 801 may receive a second message from the blockchain network 106. The second message is received over the second connection, e.g. the Internet. The third party 801 then sends the second message (or a message based on the second message) to the first party 801 and/or the second party via the first connection. In these examples, the second party 402 also cannot send and receive data to and from the blockchain network 106. As an example, the second message may comprise confirmation (e.g. a Merkle proof) showing that the first transaction has been recorded on the blockchain.

As an example, the system 800 may be used to facilitate the transmission of token transactions to the blockchain network 106. The transferor 401 may send a candidate transfer transaction to the transferee 402, or a message containing data for generating the candidate transfer transaction. Candidate transfer transactions have been described above with reference to Figures 6 and 7. The transferor 401 and transferee 402 may communicate over any suitable connection common to both parties, e.g. the first connection. The transferee 402 then sends a transfer transaction (i.e. the candidate transfer transaction, validated by the transferee 402) to the trusted third party 801 via the first connection, e.g. via GPRS. Rather than sending the transfer transaction itself, the transferee 402 may send a message containing data for generating the transfer transaction. The trusted third party 801 submit the transfer transaction to the blockchain network 106 over the second connection, e.g. via the Internet. The trusted third party 801 may obtain confirmation from the blockchain network 106, via the second connection, and sends a response to the transferee 402 via the first connection. The transferee may forward the response to the transferor 401.

## 8. DIGITAL CASH

This section briefly describes an example Digital Cash protocol. Digital Cash may be implemented using a blockchain-based token protocol. Embodiments of the present disclosure may be implemented in the context of this example Digital Cash protocol.

### 8.1 Blockchain network

The blockchain network 106 ensures that no digital cash payments can be double spent, and because the blockchain 150 is public it enables transparency of token circulation.

Furthermore, through its consensus mechanism the blockchain network 106 guarantees the correct execution of digital cash payments.

### 8.2 Issuer

A token issuer authority (e.g., a central bank) issues digital cash in the form of tokens. Each issuance is published to the blockchain network 106. An issuer establishes network connections with the blockchain network 106 and the delegated entities described below.

### 8.3 Delegated entities

Delegated entities may be trusted third-party entities (e.g. commercial banks), highly regulated, each with associated wallets. Their role is to:

- Receive newly issued tokens and store them using their wallets,
- Communicate with users (e.g. distribute issued tokens to users),
- and send transactions to the blockchain network 106.

The entities establish network connections with the blockchain network 106, the issuer and user wallets. Some issuers may also be delegated entities.

### 8.4 Users

Users (e.g. citizens wishing to exchange digital cash payments) have associated user wallets. The wallets receive tokens from delegated entities as well as make digital cash payments to other user wallets. They may be connected to the blockchain network 106 depending on the P2P payment protocol, they also establish connections with other user wallets, as well as with one or more delegated entities. Users cannot be issuers, nor delegated entities. Alice 103a and/or Bob 103b may be users of the token protocol.

8.5 Digital certificates and PKI

This section describes a public key infrastructure (PKI) that can be used by the token issuer, delegated entities and users. It is assumed that several trusted third parties (TTP) and certificate authorities (CA) can be embodied by, for example, central banks and government institutions.

8.5.1 PKI

Each user may generate a private key $sk_{id}$ and associated public key $pk_{id}$. The public key $pk_{id}$ is certified by a CA (see Section 8.5.2) upon the user proving their identity. This certification of identity can have two Know-Your-Client (KYC) tiers:

1. Either the user has proven their identity with their national ID, or
2. The user has confirmed their phone number and/or e-mail address.

The second option may limit how many transactions and the value of each digital cash payment a user can execute. An attestation of the certification (i.e. the digital certificate generated in Section 8.5.2) may be added on-chain.
We refer to $sk_{id}$ and $pk_{id}$ as identity keys. Furthermore, a user may also store a personal master key that is generated by their wallet application. From this master key, they can derive keys using, for example, the hardened key derivation protocol of BIP32. We refer to these keys as ephemeral keys and they should preferably only be used once.
The token issuer and delegated entity PKI may comprise one or more master keys, stored securely offline (i.e., cold storage). These master keys are used to generate online Level 1 keys (*L1*) with limited time validity (e.g., monthly validity) maintained online and used for certification. From these keys the token issuer and delegated entity can derive the Level 2 keys (L2) used to sign transactions. L2 keys have an even stricter time validity (e.g., daily). Similarly to user identity keys, L1 and L2 keys are certified by a CA.
The PKI structure just described can be deployed with randomly generated L2 keys and then certified with a signature from a valid L1 key. Here, public keys are linked to an outpoint, and it is possible to check whether a public key is valid by simply checking whether the corresponding outpoint is in the UTXO set. In other words, a public key is valid until the associated UTXO stays in the mempool UTXO set, and it is invalidated by spending the associated UXTO.

8.5.2 Digital certificates

Each digital certificate may include some or all of the following information:

• A hash of private information such as phone number, e-mail address or national ID (in case of a user) or registry number (in case of a token issuer or delegated entity),
• Certification tier referring to which type of KYC the user executed. The tier of delegated entities always refer to the strongest KYC process.
• The identity public key in case of users, or in case of delegated entities L1 or L2 public keys,
• Date of certificate issuance,
• Expiry date of the certificate,
• A digital signature over the above items created with the private key of the CA.

The time validity of L1 and L2 keys is managed through the digital certificate issuance and expiry dates.
The CA publishes the public keys associated with the private keys used for signing. The public keys can be available on a website or web repository. New keys can be issued and old keys can be revoked as explained in the section above. Once keys are revoked, the digital certificate needs to be reissued.
We note digital certificates can be renewed before their expiration date. This does not invalidate the previous certificate unless they have expired.
Upon receiving a digital certificate, an entity or user establishes its validity by checking that:

1. The current date is between the date of issuance and expiry date,
2. and the digital signature is valid.

8.6 Token issuance and structure

Tokens can be issued only by the token issuer, and they are not pegged to the underlying digital asset. Each token has a value, expressed with regard to the currency of the token issuer, as well as additional information certifying its issuance.

Upon issuance the token is embedded in a transaction and is addressed to one of the delegated entities. The delegated entity can be selected randomly, or the delegated entity requests fresh tokens for distribution. If a user is entitled to receive the token (for example if they have requested a digital cash transfer), the delegated entity is responsible to send the token to the user's wallet.

Table 1 shows an example of a token issuance transaction:

Table 1

| $TxID_{issue}$ | | | |
|---|---|---|---|
| Version | 1 | Locktime | 0 |
| In-count | 1 | Out-count | 1 |
| Input list | | Output list | |
| Outpoint | Unlocking script | Value | Locking script |
| Issuer's outpoint | $< Sig_{Issue} >$ $< PK_{Issue} >$ | dust | OP_DUP OP_HASH160 <$H(PK_{delegate})$> OP_EQUALVERIFY OP_CHECKSIG OP_RETURN <Token(X) Specification> |

where <Token Specification> can be

| Token Currency | Great Blockland Pound (GBP) |
|---|---|
| Token Value | X GBP |
| Reserve: Issuance | 1: 1 |
| Contact detail | Issuer@ctsforgbp.com ($PK_{Issue}$) |
| Jurisdiction | Great Blockland |
| Issuance Licence | Central Bank of Great Blockland |
| Extra Information | GBP for everyone |

8.7 Delegated entity wallets

Each delegated entity has an associated wallet that keeps track of the tokens it can distribute to other users. The capabilities supported by the wallet may include one or more of the following:

- Keep track of the total amount of tokens available to distribute.
- For each token, record the outpoint location (UTXO index and transaction ID in which the token is located).
- Set up a key wallet and create private public key pairs as described above.
- Record public keys of the CA.
- Communicate with other delegated entities.
- Receive issued tokens from the token issuer.
- Distribute issued tokens to users.

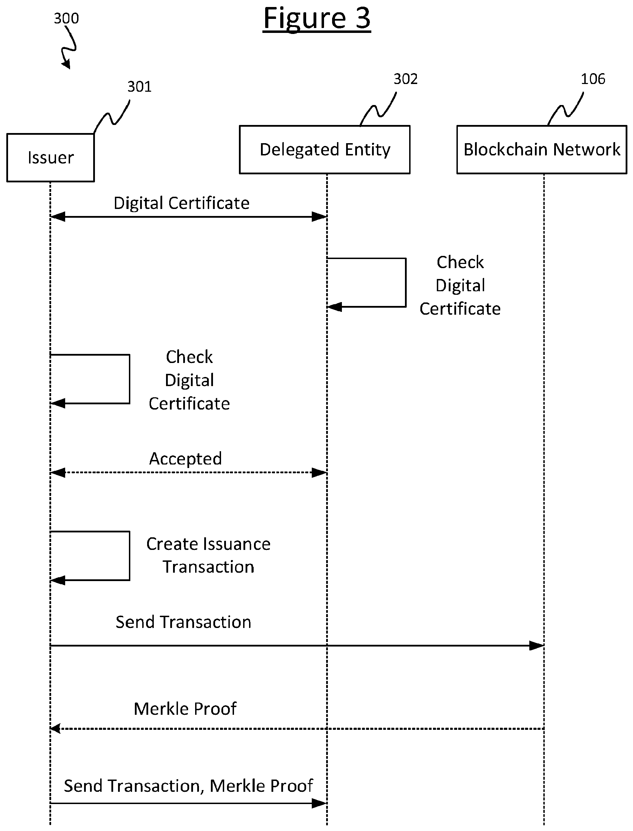

Below details how delegated entities can receive payments from the token issuer. Figure 3 illustrates an example protocol for issuing tokens:

1. The delegated entity 302 and the token issuer 301 exchange off-chain their digital certificates.
2. The delegated entity 302 and token issuer 301 check the validity of the received digital certificate. If the certificates are valid, the remaining steps are executed. Otherwise, the protocol stops.

3. The token issuer 301 creates transaction $TxID_{issue}$ with a payment addressed to the public key contained in the certificate of the delegated entity 302.

4. The transaction is sent by the token issuer 301 to the blockchain network 106.

5. The issuer 301 gets a confirmation from the blockchain network 106 that the transaction is valid.

6. The issuer 301 sends off-chain a copy of the transaction to the delegated entity 302. The delegated entity 302 is now aware of the transaction contents and amount of issued digital cash they can distribute to user wallets.

Since the token issuer 301 and delegated entities 302 have an associated digital certificate and the transactions are published on-chain, the protocol of issuing tokens is secure when a majority of delegated entities 302 behave correctly.

8.8 User wallets

A user wallet may have one or more of the following capabilities:

- Keep track of the total amount of tokens available to the user.
- For each token, record the outpoint location (UTXO index and transaction ID where the token is located).
- Set up a key wallet and create private public key pairs as described above.
- Stores and frequently updates the public keys of the CA.
- Communicate with delegated entities and other user wallets (e.g. via TCP/IP). It may also have the capability to connect to the blockchain network 106.
- Send and receive digital cash.

To distribute an issued token to a user wallet, the delegated entity 302 may create the following transaction, shown in Table 2, spending the output of $TxID_{issue}$:

*Table 2*

| $TxID_{user}$ | | | |
|---|---|---|---|
| Version | 1 | Locktime | 0 |
| In-count | 1 | Out-count | 1 |
| Input list | | Output list | |
| Outpoint | Unlocking script | Value | Locking script |
| $TxID_{issue}\|0$ | $< Sig_{delegate} > < PK_{delegate} >$ | *dust* | OP_DUP OP_HASH160 $<H(PK_{user})>$ OP_EQUALVERIFY OP_CHECKSIG OP_RETURN <Token(X) Specification> |
| Delegate's output | $< Sig_{delegate} > < PK_{delegate} >$ | | |

The second input of the transaction $TxID_{user}$ funds the transaction with any required transaction fees.

A user can receive tokens in their wallet from a delegated entity 302 in the following cases:

- they receive a transfer from their bank (acting as a delegated entity) to their digital cash wallet (e.g. digital cash withdrawal),
- they execute the Melt and Mint protocol described below.

To compute $PK_{user}$ user wallets may choose one of the options below:

- Either $PK_{user}$ is computed from $pk_{id}$ and $pk_e$ as below:

$$PK_{user} = pk_{id} + pk_e$$

where we recall that $pk_{id}$ is the identity public key and $pk_e$ is the ephemeral public key of the user wallet.

- Or $PK_{user}$ is derived by the wallet using a key derivation mechanism such as BIP32.

In the latter case, the user wallet can create a link between $PK_{user}$ and $pk_{id}$ by defining $pk_e = PK_{user} - pk_{id}$. The ephemeral key $pk_e$ may be used to link user digital certificates and identity public key to transaction payments and on-chain public keys.

$PK_{user}$ may only be used once and may have no correlation to $pk_{id}$. No correlation ensures on-chain public keys $PK_{user}$ cannot be linked to identity public keys $pk_{id}$. To achieve this, it is sufficient for the ephemeral public key $pk_e = PK_{user} - pk_{id}$ to have enough randomness.

8.9 Melt and Mint protocol

This section details how users can send and receive digital cash payments using a Layer 2 protocol that involves a reduced involvement of delegated entities 302 in comparison to some protocols. This protocol aims at finding a balance between addressing the trace back to issuance problem and decentralisation. Any of the examples described in this section may be used in conjunction with the melt and mint protocol described in section 5 above.

User-to-user digital cash payments are referred to as Peer-to-Peer (P2P) transactions, payments, or transfers. Unless otherwise stated, the term $X$ tokens will refer to only one UTXO containing a digital cash payment of value $X$.

*Melt and Mint* is a protocol that reduces the number of checks that have to be performed in order to validate tokens - tokens do not have to be traced back to issuance, thereby solving the trace back to issuance problem). Since delegated entities 302 can create bottlenecks during peak times, their role is minimised in P2P transactions, without completely removing them. In this solution, delegated entities 302 will have to check the validity of tokens between two transactions (having checkpoint roles) which are referred to as Melt and Mint transactions. The two transactions are defined as:

- a melt transaction (representing a Melt checkpoint) where tokens are sent from the user (e.g. transferor 401) to the delegated entity 302,
- a mint transaction (representing a Mint checkpoint) where tokens are returned from the delegated entity 302 back to the same user.

After a mint transaction there will be on average T chained transactions before a melt transaction.

Each user wallet may store units of the underlying digital asset, e.g. satoshis. These satoshis are located in the value of each UTXO containing tokens. They are received from the delegated entity 302 upon the user wallet requesting a transfer from e.g. a bank to their digital cash wallet, or through the Melt and Mint protocol. Receiving satoshis from the delegated entity 302 works like a top-up system for the user, where the role of the satoshis is to cover transaction fees of P2P payments without involving delegated entities 302 in the payment process. The structure of a P2P payment is illustrated below in Table 3 below:

*Table 3*

| | | | | $TxID_{AliceBob}$ | |
|---|---|---|---|---|---|
| | Version | 1 | | Locktime | 0 |
| | In-count | 1 | | Out-count | 2 |
| | Input list | | | Output list | |
| Value[1] | Outpoint | Unlocking script | | Value | Locking script |
| $s$ sat | Alice's outpoint | $<Sig_{Alice}><PK_{Alice}>$ | | s/2 sat | OP_DUP OP_HASH160 $<H(PK_{Bob})>$ OP_EQUALVERIFY OP_CHECKSIG OP_RETURN <Token($X$) Specification> |
| | | | | *s/2 - fees* sat | OP_DUP OP_HASH160 $<H(PK_{Alice})>$ OP_EQUALVERIFY OP_CHECKSIG OP_RETURN <Token($Y$) Specification> |

In the transaction above it is required that the transferor Alice 401 spends $Z = X + Y$ tokens contained in a UTXO with value s satoshis. In addition, Alice sends half of their satoshis to the transferee Bob 402 and receives back the rest of satoshis minus the transaction fees. Consequently, Bob 402 will have s/2 satoshis in their wallet so that they spend their $X$ tokens. The choice of sending s/2 to Bob 402 is arbitrary, and other choices may be made by the wallet.

Whenever a user wallet of the transferor 401 wants to spend a token located in an UTXO with insufficient satoshis to create at least two more transactions, then the Melt and Mint protocol of threshold T executes the following steps:

1. The user wallet 401 requests a Melt checkpoint from a delegated entity 302.

2. The delegated entity 302 wallet sends their digital certificate to the user wallet 401.

3. The user wallet 401 checks the validity of the certificate received in Step 2.

[1] This column is not part of a transaction, but we add it here for illustration purposes.

4. The user wallet 401 spends the UTXO and sends the satoshis and tokens to the public key of the delegated entity 302 contained in the certificate. The created transaction is the melt transaction.

5. The user wallet 401 derives a public key $PK'_{user}$ they want to receive the tokens to.

6. The delegated entity 302 verifies the user wallet's identity:

    a. The user wallet 401 sends the digital certificate to the delegated entity 302.

    b. The delegated entity 302 checks the digital certificate.

    c. The user wallet 401 sends a signature over their digital certificate created using

$$pk_e = PK_{user} - pk_{id}$$

where $PK_{user}$ is the public key contained in the input of the melt transaction.

    d. The delegated entity 302 checks the signature received in Step 6c.

    e. The delegated entity 302 checks that $pk_{id}$ in the user's digital certificate satisfies $pk_{id} = PK_{user} - pk_e$.

7. The delegated entity 302 checks that all tokens are valid by tracing back to each mint transaction using the validation protocol described below.

8. The delegated entity 302 creates a mint transaction with a payment to the address provided by the user 401. The payment is included in an UTXO comprising of:

    a. The same amount of token sent by the user wallet 401 to the delegated entity through the melt transaction.

    b. An associated satoshi value that is enough to, on average, cover T transactions until Step 1 needs to be executed again.

In case the delegated entity 302 did not assign enough satoshis in Step 8b, a user 401 can opt for an early execution of the Melt and Mint protocol. Otherwise, if the user 401 doesn't have enough satoshis remaining in the wallet, they cannot execute further token payments. This situation might occur in case of excessive number of UTXOs being created in the chain of transactions. We estimate how many satoshis the delegated entities 302 have to assign further below.

Figure 5 illustrates a chain of transactions between a mint transaction $TxID_0$ and a melt transaction.

In summary, Melt and Mint presents the following features:

- The delegated entities 302 wait for requests to Melt and Mint tokens.
- The delegated entities 302 only pays mint transaction fees to cover chains of T transactions.
- Payment traceability is reduced from the perspective of the public when executing Melt and Mint because the Melt public key is always different than the Mint public key.

8.10 P2P payment and Token validation

To execute a P2P payment we assume in this section that both parties involved are online. The payer (transferor) 401 is a user and the payee (transferee) 402 is either a user or delegated entity 302. Any of the examples described in this section may be used in conjunction with the transfer and validation protocols described in section 6 above.

To receive tokens, the payer 401 and payee 402 follow the protocol below:

1. The payer 401 sends to the payee 402:

    a. The transaction containing the token payment; and

    b. A list of transactions that link the payment to minting transactions.

2. The payer 401 sends to the payee 402 the digital certificates of the delegated entities 302 that created the minting transactions to which the payer's transaction is chained.

3. The payee 402 verifies validity of the transaction and whether token rules have been correctly implemented. This is done by tracing back token payments until reaching a minting transaction. Minting transactions are identified using the digital certificate of the delegated entity.

4. The payee 401 submit the transaction to the blockchain.

We expand on Step 3 and use a concrete example illustrated in Figure 7. Figure 7 shows a diagram of transactions received by Bob 402. Arrows represent the spending of outputs. Transactions labelled TxMint are minting transactions created by delegated entities 302. The right-most transaction is the payment to Bob 402 from Alice 401 and change going back to Alice 401. The diagram illustrates a payment tree that Bob 402 needs to validate in order to accept the payment from Alice 401, where the leaves are represented by minting transactions. In general the set of transactions received by Bob 402 may form a directed acyclic graph (DAG). We next detail how Bob 402 can validate the token they received from Alice 401. The transaction Bob 402 receives from Alice 401 has the following format, shown in Table 4:

*Table 4*

| $TxID_{AliceBob}$ | | | |
|---|---|---|---|
| Version | 1 | Locktime | 0 |
| In-count | $n$ | Out-count | 2 |
| Input list | | Output list | |
| Outpoint | Unlocking script | Value | Locking script |
| Alice's outpoint | $< Sig_{Alice} >$ $< PK_{Alice} >$ | $x$ | OP_DUP OP_HASH160 $<H(PK_{Bob})>$ OP_EQUALVERIFY OP_CHECKSIG OP_RETURN <Token($X$) Specification> |
| Alice's outpoint | $< Sig_{Alice} >$ $< PK_{Alice} >$ | y | OP_DUP OP_HASH160 $<H(PK_{Alice})>$ OP_EQUALVERIFY OP_CHECKSIG OP_RETURN <Token($Y$) Specification> |
| ... | ... | | |
| Alice's outpoint | $< Sig_{Alice} >$ $< PK_{Alice} >$ | | |

Assume Alice 401 unlocks Z tokens and z satoshis. In order to validate this transaction, Bob 402 has to check:

$$Z\ (unlocked\ number\ of\ tokens) = X\ (received\ tokens) +$$

1. $Y\ (change\ tokens\ sent\ back\ to\ Alice).$

2. Check that the Token Specifications have the required format.

3. $z = x + y + fees$ (*transaction fees paid to the miner*) - in order to guarantee that this transaction hasn't been added to the secondary mempool of the blockchain node 104, which may prevent the transaction from being recorded on the blockchain 150.

Furthermore, Bob 402 may be required to validate the transactions containing the outpoints spent by Alice 401 in $TxID_{AliceBob}$. In order to do this Bob 402 performs the same checks to guarantee that the received tokens are valid, as below.

For each transaction up to minting transactions $TxID_{mint}$ (see Table 5), Bob 402 executes the following steps:

1. Check whether the sum of input tokens is the same as the sum of output tokens.

2. Check if there are enough transaction fees being paid.

3. Check if the token specifications have been followed.

In essence Bob 402 executes a DAG traversal algorithm (e.g. Depth First Search (DFS) and Breadth First Search (BFS)) to check the validity of the payment received from Alice 401.

*Table 5*

| TxID$_{mint}$ | | | |
|---|---|---|---|
| Version | 1 | Locktime | 0 |
| In-count | 1 | Out-count | 1 |
| Input list | | Output list | |
| Outpoint | Unlocking script | Value | Locking script |
| Mint out-point | < $Sig_{mint}$ ><br>< $PK_{mint}$ > | $w$ | OP_DUP OP_HASH160 <$H(PK_{JohnDoe})$><br>OP_EQUALVERIFY OP_CHECKSIG OP_RETURN <Token($W$) Specification> |

Recall that for each minting transaction Bob 401 has also received a digital certificate to identify the delegate entity 302. To check whether the above transaction is a minting transaction, Bob 402 has to check the following:

1. If $PK_{mint}$ is located in the corresponding digital certificate,
2. The digital certificate of the delegate entity is valid. It may happen that the certificate has expired. In this case the user wallet 402 can either accept the payment at their own risk or ask the delegated entity 302 to perform the validation and check using on-chain data the payment validity.

Bob may also send the following to a next payee when making a digital cash payment so that the payee can validate the payment:

1. Bob sends the transaction payment to the payee.
2. For each input, Bob sends the complete payment DAG of transactions (or tree).
3. Bob sends all digital certificates of delegated entities associated to each minting transaction that is part of Alice's payment DAG.
4. Bob can now delete each sent digital certificate corresponding to delegated entities.

Finally, all above steps may be performed by delegated entities 302 as well when receiving tokens from user wallets 401. This happens through a melt transaction as described above. The validation protocol is the same.

The token validation process can be rather heavy in terms of communication (Step 1) and validation (Step 3). This is because the number of transactions grow exponentially in the number of outputs. Thus, if there are too many transactions to send to a payee (e.g. more than 10), a payer can first ask for an early execution of Melt and Mint and afterwards send the payment to the payee. This reduces the communication to only two transactions (the mint transaction and the transaction containing the token payment).

8.11 Online and offline payments

User wallets are typically deployed on phones that have the computational power to validate ECDSA signatures and execute SHA256 hashes. Depending on location, however, token payments can occur online or offline and the checks a payee 402 must execute are dependent on their connectivity to the blockchain network 106. Devices may be distinguished by their connectivity level:

- Level 1 - internet connection
- Level 2 - mobile coverage (e.g. GPRS)
- Level 3 - low-frequency (e.g. 300 Mhz) radio coverage
- Level 4 - offline

A user 401, 402 has connectivity Level 3 if they own a device that can translate between radio and GPRS signal (e.g. issued by an authority). Translation between radio and internet signal can be achieved through using a radio access network or Tetra. The advantage is that implementation costs are low since the radio infrastructure already exists and it has wider reach than the internet. The only incurred costs are the devices that can translate between radio and internet signal.

Levels 2 and 3 involve a trusted third party 801 that receives messages from users 401, 402, translates them into transactions and forwards them to the blockchain 150. These trusted parties 801 may be mobile or radio companies, or companies that have built the underlying network infrastructure. The trusted third parties 801 do not necessarily have to be one of the delegated entities 302, though that is an option.

Users 401, 402 that have Level 4 connectivity can receive payments through short-range wireless protocols (e.g. Bluetooth), but have no means of connecting to the blockchain 150 (either directly or through a trusted third party 801).

Depending on the connectivity level, different checks or communication protocols need to be established between the payer 401, payee 402 and blockchain network 106. The payer 401 can have any connectivity level as long as it can communicate with the payee 402. Each payment protocol is detailed for each connectivity level of the payee 402 assuming melting and re-minting do not have to be executed. Any of the examples described in this section may be used in conjunction with the payment protocols described in section 7 above.

8.11.1 Level 1 protocol:

This is the protocol detailed in Section 8.10 and is repeated here for completeness:

1. The payer 401 sends to the payee 402:

    a. The transaction containing the token payment; and
    b. A list of transactions that link the payment to minting transactions.

2. The payer 401 sends to the payee 402 the digital certificates of the delegated entities 302 that created the minting transactions to which the payer's transaction is chained.
3. The payee 402 verifies validity of the transaction and whether token rules have been correctly implemented. This is done by tracing back token payments until reaching a minting transaction. Minting transactions are identified using the digital certificate of the delegated entity.
4. The payee 401 submit the transaction to the blockchain.

8.11.2 Level 2 and 3 protocol:

1. The payer 401 and payee 402 execute Steps 1-3 of the Level 1 protocol.
2. The payee 402 submits the transaction via SMS or radio to a trusted third party 801.
3. The trusted third party 801 submits the transaction to the blockchain 150 and receives a response from the blockchain network 106.
4. The trusted third party 801 sends the response to the payee 402 via SMS or radio.
5. The payee 402 accepts the payment if the response from the blockchain network 106 is that the transaction is valid.

8.11.3 Level 4 protocol:

1. The payer 401 and payee 402 execute the Steps 1-3 of the Level 1 protocol.
2. The payer 401 sends to the payee 402 a Merkle proof of the minting transaction and corresponding block header.
3. The payee 402 performs the checks detailed in Section 8.13.
4. The payee 402 accepts the payment when all checks have been successfully performed. In case of double spends, the protocol in Section 6.2 is executed once the payee 402 gains better connectivity (Level 3 or higher).

Even though the payee 402 executes checks in offline payments they are still reliant on a certain degree of trust between the payer 401 and payee 402. To mitigate the risks of offline transactions, the payee 402 may choose to only accept a limited payment value from the payer 401. The risk of such a payment may be modelled by the payee's wallet using a mathematical utility function.

8.12 Melt and Mint integration

If the payee 402 is always online (Level 1 connectivity), then they may opt for executing Melt and Mint before every token payment. By calling Melt and Mint there is no traceable link between transactions from a public perspective, and the delegated entity 302 has no knowledge of the token payment that will be made until Melt and Mint is called by the payee 402.

Levels 2, 3 and 4 connectivity, on the other hand, always rely on Melt and Mint with a threshold of T transactions.

When a user runs out of available fees or reaches the threshold T and re-minting must be executed. In case of levels 2 and 3, users can request re-minting. However, in case of Level 4, a user needs to increase their connectivity level to at least 3. This can be achieved as follows:

- Either the user finds a geographical region with radio or mobile coverage, or
- One of the delegated entities can have a mobile station that can be called upon by the user or regularly transit the user's area. The mobile station has at least Level 3 connectivity, and the user connects to it for re-minting.

8.13 Offline payment verification

To enable offline payments between users, there is a need to ensure that transaction validity can be verified and that users can be held accountable if they are cheating. Referring to the example transaction chain in Figure 5, it is assumed that Alice 401 wants to pay Bob 402 and that Bob 402 is offline. Bob 402 receives from Alice 401 (e.g. via Bluetooth):

- Transaction $TxID_1$ from Alice 401,
- The minting transaction $TxID_0$,
- A Merkle inclusion proof of transaction $TxID_0$ within the block and
- The block header in which $TxID_0$ has been included.

Bob 402 is required to store a list of public keys from several CAs. This does not have a significant storage overhead, since it is expected that few authorities will have a CA role. The verification protocol is split into a payment verification and identity verification part.

8.13.1 Payment verification

1. Bob 402 computes the Merkle root using the Merkle proof of $TxID_0$.
2. If the Merkle root is not the same as the one in the block header, Charlie 103c rejects the payment.
3. Otherwise, Bob 402 checks if the difficulty target in the block header where the transaction is stored, is above a predefined threshold. Otherwise, it stops the protocol since Alice 401 might be sending an invalid Merkle proof and header.
4. Bob 402 checks if $TxID_1$ spends Alice's UTXO in $TxID_0$ using Alice's signature and public key

$$pk = pk_{id} + pk_e,$$

where we recall that $pk_{id}$ is the identity public key and $pk_e$ is the ephemeral public key that can only be used once.
5. Bob 402 checks the validity of the tokens. Otherwise, the payment is rejected.

8.13.2 Identity verification

6. Alice 401 sends $pk_e$ and their digital certificate signed using the private key associated to $pk_e$ to Bob 402.
7. Furthermore, Alice 401 sends to Bob 402 any digital certificate and ephemeral key $pk_e$ of the users in the chain of transactions from the minting transaction to the current transaction.
8. Bob 402 checks the validity of each digital certificate:

   a. If the signature created with $pk_e$ over the digital certificate is valid.
   b. If $pk - pk_e$ is the identity public key in the digital certificate.
   **c.** If the digital certificate is valid.

If Bob 402 wants to send a payment to an offline user that request identity verification, then Bob 402 sends their digital certificate together with their $pk_e$ as well as all digital certificates and keys they received from Alice 401.

### 8.13.3 Public key format

It may seem apparent that the public keys have to be in the format $pk = pk_{id} + pk_e$ in order to enable the offline payment verification. This is not the case. If Alice 401 has received payment to a P2PKH using a public key $pk'$ associated to a private key $sk'$ she can still prove her identity to Bob 402. This is done by Alice 401 defining an ephemeral private key

$$sk_e' = sk' - sk_{id}$$ and associated public key $$pk_e' = pk' - pk_{id}$$ . Then Alice 401 can execute Step 5 using $$pk_e'$$

and create the signature with the private key $$sk_e'$$ .

### 8.13.4 Security

If Alice 401 submits a different version of $TxID_1$ on the blockchain, Alice 401 has then signed two different transactions spending their UTXO in $TxID_0$. If Alice 401 has provided Bob 402 their digital certificate, Alice 401 is identifiable by a trusted third party 801 and Alice 401 is legally liable for double spending and defrauding Bob 402.

Whoever sends Bob 402 the payment has to be Alice 401, i.e. Alice 401 cannot be impersonated by Charlie 103c without knowledge of Alice's private keys. The reason is as follows: if $TxID_1$ spends Alice's UTXO in $TxID_0$ then Charlie 103c has knowledge of the private key $sk$. Since Bob 402 checks the signature over the digital certificate using $pk_e$ (Step 7a), then Charlie 103c also has knowledge of Alice's private key $sk_e$. Consequently, Charlie 103c has knowledge of the private key $sk_{id}$. Thus, Charlie 103c must have been Alice 401.

### 8.13.5 Proof of Work vs Proof of Stake

Charlie 103c can be sure that the transactions are valid and that the inclusion of $TxID_0$ in a block is correct based on the Merkle proof and the block header. In Proof of Work, new blocks require a certain amount of time to be produced, therefore a user can verify the validity of a chain even if it is received from an untrusted source. A malicious user cannot create a fake chain with the same proof of work embedded, unless wasting a significant amount of computational power and money. The same level of security cannot be ensured in Proof of Stake because the inclusion of a transaction in on the blockchain is based on machine votes, which cannot be easily verified offline.

### 8.13.6 Pseudonymity

Only $pk = pk_{id} + pk_e$ is published on-chain, transactions are therefore pseudonymous. However, the payee (Bob) 402 can always prove the identity of the payer 401 using off-line information ($pk_e$ + digital certificate). The verification protocol therefore mitigates risks of offline transactions .

### 8.14 Settlement of offline payments

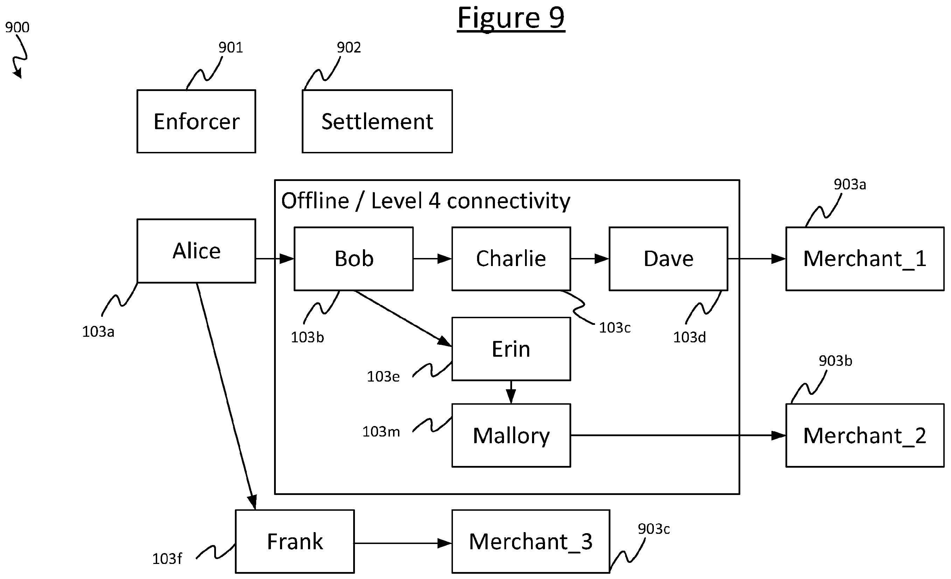

In this section we show how all payees 402 that have received offline payments and that have been double spent can be refunded. In order to do this we introduce two additional trusted third parties 801 we refer to as *enforcer* 901 and *settlement* 902 entities. The settlement entity 902 is responsible for responding to double spend notifications and correctly paying any user that has been double spent. The enforcer entity 901 is responsible for retrieving the damage done by the user that has double spent. In order to exemplify the process and clarify the ideas, we use the example given in Figure 9 where Alice 103a, Frank 103f, Merchant1 903a, Merchant2 903b and Merchant3 903c, and the enforcer 903 and settlement 902 entities have at least Level 3 connectivity.

We first investigate the case when all users have digital certificates of the first KYC tier, and later we discuss how we can reduce this requirement. The flow of the payment scenario given in Figure 9 is the following:

 1. Alice 103a double spends, by spending the same UTXO to pay Bob 103b and Frank 103f.
 2. All offline participants exchange payments offline, unaware that their payments depend on Alice's payment.

Note: all payments are exchanged using the offline payment verification protocol. Thus, all participants are aware of all digital certificates of all payers up to Alice 103a.

 3. Dave 103d makes a payment to Merchant1 903a, which is online. The payment follows the Level 1 payment protocol.
 4. Merchant1 903a detects the double spend when trying to settle the transaction received from Dave 103d.
 5. Alice 103a receives a notification that they double spent and the option to create transactions to pay tokens to Bob 103b, Charlie 103c, Dave 103d and Merchant1 903a.

If Alice 103a doesn't create the transactions, then:

a. Merchant1 903a sends a double spend proof together with the digital certificates of Alice 103a, Bob 103b, Charlie 103c and Dave 103d to the settlement entity 902.

b. The settlement entity 902 stores the chain of payments from Alice 103a to Merchant1 903a, sending to the enforcer entity 901 a digital proof of Alice's behaviour.

c. The settlement entity 902 creates new transactions to pay the damages to Bob 103b, Charlie 103c and Dave 103d. The transaction created to pay Charlie 103c is given in Table 6.

d. The settlement entity 902 sends them to the blockchain network 106. Bob 103b, Charlie 103c and Dave 103d will be notified of these payments once they are online.

6. Mallory 103m makes a payment to Merchant2 903b, which is online. The payment follows the Level 1 payment protocol.

7. Merchant2 903b detects the double spend when trying to settle the transaction received from Mallory 103m.

8. Alice 103a receives a notification that they double spent and the option to create transactions to pay tokens to Bob 103b, Erin 103e, Mallory 103m and Merchant1 903a.

If Alice 103a doesn't create the transactions, then:

a. Merchant2 903b sends a double spend proof together with the digital certificates of Alice 103a, Bob 103b, Erin 103e and Mallory 103m to the settlement entity 902.

b. The settlement entity 902 stores the chain of payments from Alice 103a to Merchant2 903b, sending to the enforcer entity 901 additional proof of Alice's behaviour.

c. The settlement entity 902 creates new transactions to pay Erin 103e and Mallory 103m. The transaction created to pay Erin 103e is given in Table 7.

d. The settlement entity 902 sends the transactions to the blockchain network 106. Bob 103b, Erin 103e and Mallory 103m will be notified of these payments once they are online.

9. For any transaction Alice 103a refuses to create, the enforcer entity 901 contacts Alice 103a. Alice 103a will have to pay to a delegated entity 302 the costs of all fees for the transactions the settlement entity 902 has to create, as well as the initial payment they made to Bob 103b.

*Table 6*

| TxSettleID$_0$ | | | |
|---|---|---|---|
| Version | 1 | Locktime | 0 |
| In-count | 1 | Out-count | 2 |
| Input list | | Output list | |
| Outpoint | Unlocking script | Value | Locking script |
| TxID$_{settlement}$ | $< Sig_{settlement} >$ $< PK_{settlement} >$ | $s_1$ SAT | [1 of 2 MultSig Charlie, Settlement] [OP_RETURN $<R_1$ tokens>] |
| | | $s_2$ SAT | [1 of 2 MultSig Bob, Settlement] [OP_RETURN $<R_2$ tokens>] |

*Table 7*

| TxSettleID$_1$ | | | |
|---|---|---|---|
| Version | 1 | Locktime | 0 |
| In-count | 1 | Out-count | 2 |

(continued)

| Input list | | Output list | |
|---|---|---|---|
| Outpoint | Unlocking script | Value | Locking script |
| $TxID_{settlement}$ | $< Sig_{settlement} >$ <br> $< PK_{settlement} >$ | $s_1$ SAT | [1 of 2 MultSig Erin, Settlement] <br> [OP_RETURN $<R_3$ tokens>] |
| | | $s_2$ SAT | [1 of 2 MultSig Bob, Settlement] <br> [OP_RETURN $<R_2 - R_3$ tokens>] |

We note that if Bob 103b would have double spent when paying Erin 103e and Charlie 103c, then Bob 103b will also receive a notification to create additional transactions. If Bob 103b remains offline, then the enforcer 901 and settlement 902 entities have to intervene as in the above protocol.

In order to reduce reliance on user digital certificates with first KYC tiers, one of the following alternative protocols may be used to increase user privacy.

### 8.14.1 Alternative 1

In the above scenario, Merchants 1 and 2 refuse payments when they detect that they cannot mine the transactions on the blockchain (Steps 4 and 7). Moreover, all the offline users lose any tokens created as change outputs as a consequence of creating transactions linked to from Alice's payment. In this case, users do not have to use digital certificates, and offline payments should be accepted only within a web of trust.

### 8.14.2 Alternative 2

All the protocol steps are followed, with the exception that digital certificates have varied KYC tiers, and Alice 103a may not be liable for double spending. Consequently, there is no need for an enforcer entity. In this case, the only proof the settlement entity receives is the double spend, and the transactions that have been created offline. Thus, the settlement entity can choose to cover all damages to the offline users up to a certain token value.

This alternative can be costly to settlement entities, if users create side chains claiming that double spends have occurred in order to receive additional payments.

### 8.14.3 Alternative 3

This alternative combines the protocol above with Alternative 1 in order to create a hybrid solution. Users have the option to request digital certificates from a CA, but this is not mandatory. For example, when Dave receives a payment from Charlie, Dave can execute the checks below:

1. Checks whether everyone in the chain of payments (from Alice to themselves) has a digital certificate of the first KYC tier.
2. If yes, then Dave accepts the payment.
3. If not (e.g. Bob doesn't have one), Dave can accept the payment at their own risk.

   a. Dave will receive any settlement from any double spent made by users with digital certificates of the first KYC tier.
   b. Dave has no way to identify users without digital certificates of the first KYC tier that double spent to the settlement and enforcer entities. In this case the settlement entity has the option but is not required to cover Dave's damages.

### 8.15 Transaction fees

Statistical models may be used to estimate how much value of the underlying asset (e.g., satoshis) is required to feed a chain on T transactions and to execute the Melt and Mint protocol. We develop one solution below and refer to the chain of transactions in Section 5.1.

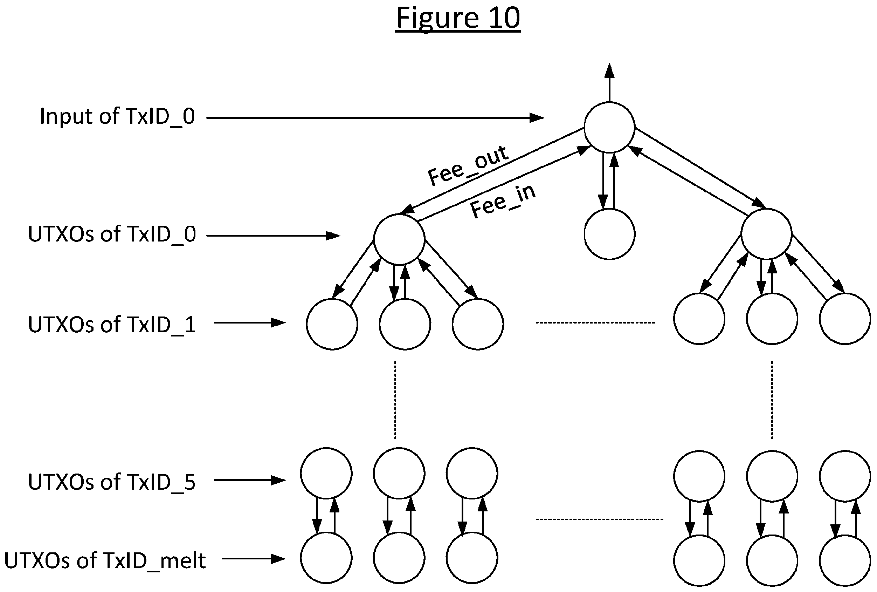

The transaction outputs form a spending graph. We assume that the graph is a tree with height 6 ($T = 5$) formed from $TxID_0, ..., TxID_5$ and $TxID_{melt}$. Each node is a transaction output and each outgoing edge from a node $N$ represents the spending of the UTXO associated with $N$. Figure 10 shows an example.

Furthermore, we associate to each node $N$ a value $V$ representing the amount of fees it can cover for subsequent transactions. For example, the root node has to cover its input fee and the fees for all subsequent transactions as well as keeping each UTXO value above the dust limit $l_d$. We assume that the UTXO values of $TxID_{melt}$ are equal to the dust limit $l_d$. We define the *minting amount* $V_{mint}$ as the associated value of the root node. More formally, $V_{mint}$ is defined as:

$$V_{mint} = \sum_i fee_{in} + \sum_j fee_{out} + \sum_{TxID_{melt}\ UTXOs} l_d$$

where $fee_{in}$ and $fee_{out}$ are the fees necessary to create P2PKH inputs and outputs respectively for all transactions.

We define the branching factor of a tree as the average amount of branches each node has in the tree. Then the minting amount for $T = 5$ is:

$$V_{mint} = fee_{in} \sum_{i=0}^{6} r_{in}^i + fee_{out} \sum_{i=1}^{7} r_{out}^i + l_d \cdot r_{out}^7.$$

where $r_{in}$ is the branching factor for he tree formed from $TxID_0, \ldots, TxID_5$ and $r_{out}$ is the branching factor for the tree formed from $TxID_1, \ldots, TxID_{melt}$. We can compute $r_{out}$ in terms of $r_{in}$ as such:

$$r_{out} = \frac{r_{in} \cdot \left(r_{in} + r_{in}^2 + \cdots + r_{in}^5\right) + r_{in}^6}{r_{in} + r_{in}^2 + \cdots + r_{in}^6}$$

We make the observation that for any $r_{in}$ we have $r_{out} \leq 2$ and we assume that $r_{out} = 2$ throughout. Then

$$V_{mint} = fee_{in} \sum_{i=0}^{6} r_{in}^i + 254 \cdot fee_{out} + l_d \cdot 128$$

Since $fee_{in}, fee_{out}$ and $l_d$ are constants, to obtain an estimate on $V_{mint}$ we need an estimate on the branching factor $r_{in}$. We determine the value $r_{in}$ heuristically using the following Melt and Mint protocol:

1. Start with an initial branching factor $r_{in\text{-}0}$ (e.g. 3).

2. Mint coins using the amount $V_{mint} = fee_{in} \sum_{i=0}^{6} r_{in}^i + 254 \cdot fee_{out} + l_d \cdot 128$.

3. Execute transactions $TxID_0, TxID_1, \ldots, TxID_5, TxID_{melt}$.

If $V_{mint}$ is too low, then execute Step 4.

Otherwise execute Step 5.

4. Execute early minting and Step 2 using $r_{in\text{-}0} + 1$ as the branching factor.

5. Compute the branching factor $r_{in}$ of the chain of transactions $TxID_0, \ldots, TxID_5$.

6. Compute the moving average branching factor $r_{in-1} = \frac{(r_{in-0} + r_{in})}{2}$.

7. Execute Step 2 using the branching factor $r_{in\text{-}1}$ for the next minting transaction.

For example, assume the first 6 transactions have a branching factor of $r_{in} = 3$ (the branching factor in Figure 10). At a transaction fee rate of 0.5 SAT/byte, we have $fee_{in} = 74$ SAT, $fee_{out} = 17$ SAT and $l_d = 135$ SAT. Then, the minting amount is $V_{mint} = 74 \cdot 1093 + 17 \cdot 254 + 17280 = 102480$ SAT.

## 7. FURTHER REMARKS

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In preferred embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

Some embodiments have been described in terms of the blockchain network implementing a proof-of-work consensus mechanism to secure the underlying blockchain. However proof-of-work is just one type of consensus mechanism and in general embodiments may use any type of suitable consensus mechanism such as, for example, proof-of-stake, delegated proof-of-stake, proof-of-capacity, or proof-of-elapsed time. As a particular example, proof-of-stake uses a randomized process to determine which blockchain node 104 is given the opportunity to produce the next block 151. The chosen node is often referred to as a validator. Blockchain nodes can lock up their tokens for a certain time in order to have the chance of becoming a validator. Generally, the node who locks the biggest stake for the longest period of time has the best chance of becoming the next validator.

## Claims

1. A computer-implemented method of performing a token protocol using a blockchain, wherein a token transfer transaction requires an input signed by a respective party and one or more respective outputs, each respective output locking a respective amount of a digital asset and comprising a respective locking script locked to a respective public key of a respective party and comprising a respective token amount, and wherein the method is performed by a delegated entity and comprises:

   obtaining a token melt transaction, wherein the token melt transaction comprises i) a first input signed by a first party, wherein the first input references a respective output of a first token transfer transaction, wherein the respective output is locked to a first public key of the first party and comprises a first token amount, and ii) a first output locked to a melting public key of the delegated entity and comprising the first token amount;

   creating a token mint transaction, wherein the token mint transaction comprises i) a respective input signed by the delegated entity using a signature corresponding to a minting public key, and ii) a respective output locking a respective amount of the digital asset sufficient to fund one or more respective token transfer transactions, wherein the respective output is locked to a second public key of the first party and comprises the first token amount; and

   causing the token mint transaction to be submitted to one or more nodes of a blockchain network.

2. The method of claim 1, comprising:

   receiving a request from the first party to initiate a melt and mint protocol; and

   in response, sending a delegated entity digital certificate to the first party, wherein the delegated entity digital certificate comprises the melting public key of the delegated entity.

3. The method of claim 1 or claim 2, wherein said creating of the token mint transaction is conditional on verifying an identity of the first party.

4. The method of claim 3, wherein said verifying of the identity of the first party comprises:

obtaining a first party digital certificate comprising an identity public key of the first party;
receiving, from the first party, a signature based on the first party digital certificate; validating the signature using an ephemeral public key obtained from the first party; and
verifying that the identify public key is based on the first public key of the party and the ephemeral public key.

5. The method of any preceding claim, wherein said creating of the token mint transaction is conditional on determining that the token melt transaction is part of a chain of token transactions that traces back to one or more token mint transactions.

6. The method of any preceding claim, wherein said creating of the token mint transaction is conditional on validating the token melt transaction, wherein said validating of the token melt transaction comprises:

obtaining, from the first party, a list of transactions tracing back to one or more respective token mint transactions linking the token melt transaction to the respective token mint transaction;
verifying that the first input of the token melt transaction can be traced back, using the list of transactions, to a respective token mint transaction; and
verifying that the first token amount comprised by the first output of the token melt transaction is equal to the first token amount comprised by the respective output of the first transfer transaction.

7. The method of claim 6, wherein said validating of the token melt transaction comprises:
for each respective token mint transaction included in the list of transactions:

obtaining a respective delegated entity digital certificate, wherein the delegated entity digital certificate comprises a respective minting public key of the respective delegated entity used to sign the respective input of the respective token mint transaction; and
verifying that the respective signature used to sign the respective input of the respective token mint transaction corresponds to a respective minting public key comprised by a respective delegated entity digital certificate.

8. The method of claim 6 or 7, wherein said validating of the token melt transaction comprises:
verifying that the respective amount of the digital asset locked by the first output of the token melt transaction is equal to a sum of the respective amount of the digital asset locked by the respective output of the first token transfer transaction referenced by the first input of the token melt transaction and a transaction fee to be collected by a blockchain node in order for the token mint transaction to be recorded on the blockchain.

9. A computer-implemented method of performing a token protocol using a blockchain, wherein each token transfer transaction requires an input signed by a respective party and one or more respective outputs, each respective output locking a respective amount of a digital asset and comprising a respective locking script locked to a respective public key of a respective party and comprising a respective token amount, and wherein the method is performed by a first party and comprises:
initiating a melt and mint protocol, wherein the melt and mint protocol comprises:

creating a token melt transaction, wherein the token melt transaction comprises i) a first input signed by the first party, wherein the first input references a respective output of a first token transfer transaction locked to a first public key of the first party and comprises a first token amount, and ii) a first output locked to a melting public key of a delegated entity and comprising the first token amount;
causing the token melt transaction to be submitted to one or more nodes of a blockchain network;
obtaining a token mint transaction, wherein the token mint transaction comprises i) a respective input signed by the delegated entity using a signature corresponding to a minting public key, and ii) a respective output locking a respective amount of the digital asset sufficient to fund one or more respective token transfer transactions, wherein the respective output is locked to a second public key of the first party and comprises the first token amount.

10. The method of claim 9, comprising:

creating a second token transfer transaction, wherein the second token transfer transaction comprises i) a second input signed by the first party, wherein the second input references the respective output of the token mint transaction, and ii) one or more respective second outputs, each second output locking a respective amount of the digital asset, wherein each respective second output comprising a respective locking script locked to a respective public key of a respective party, and a respective token amount, wherein a sum of the respective token amounts is equal to the first token amount; and

causing the token second token transaction to be submitted to one or more nodes of a blockchain network.

11. The method of claim 9 or claim 10, wherein initiating the melt and mint protocol comprises:

requesting a token melt transaction from the delegated entity;

receiving a delegated entity digital certificate from the delegated entity, wherein the delegated entity digital certificate comprises the melting public key of the delegated entity.

12. The method of any of claims 9 to 11, wherein the delegated entity has access to a first party digital certificate comprising an identity public key of the first party, and wherein the method comprises:

generating a signature based on the first party digital certificate using a private key corresponding to an ephemeral public key, wherein the ephemeral public key is based on the first public key of the first party and the identity public key of the first party; and

sending the signature to the delegated entity.

13. The method of any of claims 9 to 12, wherein said initiating is in response to determining that the first party cannot create a next token transfer transaction due to an insufficient amount of the digital asset.

14. Computer equipment comprising:

memory comprising one or more memory units; and

processing apparatus comprising one or more processing units, wherein the memory stores code arranged to run on the processing apparatus, the code being configured so as when on the processing apparatus to perform the method of any of claims 1 to 13.

15. A computer program embodied on computer-readable storage and configured so as, when run on one or more processors, to perform the method of any of claims 1 to 13.

**Patentansprüche**

1. Computerimplementiertes Verfahren zum Durchführen eines Tokenprotokolls unter Verwendung einer Blockchain, wobei jede Tokenübertragungstransaktion eine von einer jeweiligen Partei signierte Eingabe und eine oder mehrere jeweilige Ausgaben erfordert, wobei jede jeweilige Ausgabe einen jeweiligen Betrag eines digitalen Vermögenswerts sperrt und ein jeweiliges Sperrskript umfasst, das an einen jeweiligen öffentlichen Schlüssel einer jeweiligen Partei gebunden ist und einen jeweiligen Tokenbetrag umfasst, und wobei das Verfahren von einer delegierten Einheit durchgeführt wird und Folgendes umfasst:

Erhalten einer Tokenschmelztransaktion, wobei die Tokenschmelztransaktion i) eine erste von einer ersten Partei signierte Eingabe umfasst, wobei die erste Eingabe eine jeweilige Ausgabe einer ersten Tokenübertragungstransaktion referenziert, wobei die jeweilige Ausgabe an einen ersten öffentlichen Schlüssel der ersten Partei gebunden ist und einen ersten Tokenbetrag umfasst, und ii) eine erste Ausgabe umfasst, die an einen öffentlichen Schmelzschlüssel der delegierten Einheit gebunden ist und den ersten Tokenbetrag umfasst;

Erzeugen einer Tokenprägetransaktion, wobei die Tokenprägetransaktion i) eine jeweilige Eingabe umfasst, die von der delegierten Einheit unter Verwendung einer einem Präge-öffentlichen Schlüssel entsprechenden Signatur signiert ist, und ii) eine jeweilige Ausgabe umfasst, die einen jeweiligen Betrag des digitalen Vermögenswerts sperrt, der ausreicht, um eine oder mehrere jeweilige Tokenübertragungstransaktionen zu finanzieren, wobei die jeweilige Ausgabe an einen zweiten öffentlichen Schlüssel der ersten Partei gebunden ist und den ersten Tokenbetrag umfasst; und

Veranlassen, dass die Tokenprägetransaktion an einen oder mehrere Knoten eines Blockchain-Netzwerks übermittelt wird.

2. Verfahren nach Anspruch 1, umfassend:

> Empfangen einer Anforderung von der ersten Partei, ein Schmelz- und Prägeprotokoll zu initiieren; und als Reaktion darauf Senden eines digitalen Zertifikats der delegierten Einheit an die erste Partei, wobei das digitale Zertifikat der delegierten Einheit den öffentlichen Schmelzschlüssel der delegierten Einheit umfasst.

3. Verfahren nach Anspruch 1 oder Anspruch 2, wobei das Erzeugen der Tokenprägetransaktion davon abhängig ist, dass eine Identität der ersten Partei verifiziert wird.

4. Verfahren nach Anspruch 3, wobei das Verifizieren der Identität der ersten Partei Folgendes umfasst:

> Erhalten eines digitalen Zertifikats der ersten Partei, das einen öffentlichen Identitätsschlüssel der ersten Partei umfasst;
> Empfangen einer Signatur von der ersten Partei, die auf dem digitalen Zertifikat der ersten Partei basiert;
> Validieren der Signatur unter Verwendung eines von der ersten Partei erhaltenen temporären öffentlichen Schlüssels; und
> Verifizieren, dass der öffentliche Identitätsschlüssel auf dem ersten öffentlichen Schlüssel der ersten Partei und dem temporären öffentlichen Schlüssel basiert.

5. Verfahren nach einem der vorhergehenden Ansprüche, wobei das Erzeugen der Tokenprägetransaktion davon abhängig ist, dass bestimmt wird, dass die Tokenschmelztransaktion Teil einer Kette von Tokentransaktionen ist, die zu einer oder mehreren Tokenprägetransaktionen zurückverfolgt werden kann.

6. Verfahren nach einem der vorhergehenden Ansprüche, wobei das Erzeugen der Tokenprägetransaktion davon abhängig ist, dass die Tokenschmelztransaktion validiert wird, wobei das Validieren der Tokenschmelztransaktion Folgendes umfasst:

> Erhalten einer Liste von Transaktionen von der ersten Partei, die zu einer oder mehreren jeweiligen Tokenprägetransaktionen zurückverfolgt werden können und die Tokenschmelztransaktion mit der jeweiligen Tokenprägetransaktion verknüpfen;
> Verifizieren, dass die erste Eingabe der Tokenschmelztransaktion unter Verwendung der Liste von Transaktionen zu einer jeweiligen Tokenprägetransaktion zurückverfolgt werden kann; und
> Verifizieren, dass der erste Tokenbetrag, der von der ersten Ausgabe der Tokenschmelztransaktion umfasst ist, gleich dem ersten Tokenbetrag ist, der von der jeweiligen Ausgabe der ersten Tokenübertragungstransaktion umfasst ist.

7. Verfahren nach Anspruch 6, wobei das Validieren der Tokenschmelztransaktion Folgendes umfasst:
für jede jeweilige Tokenprägetransaktion, die in der Liste von Transaktionen enthalten ist:

> Erhalten eines jeweiligen digitalen Zertifikats der delegierten Einheit, wobei das digitale Zertifikat der delegierten Einheit einen jeweiligen öffentlichen Prägeschlüssel der jeweiligen delegierten Einheit umfasst, der zum Signieren der jeweiligen Eingabe der jeweiligen Tokenprägetransaktion verwendet wird; und
> Verifizieren, dass die jeweilige Signatur, die zum Signieren der jeweiligen Eingabe der jeweiligen Tokenprägetransaktion verwendet wird, einem jeweiligen öffentlichen Prägeschlüssel entspricht, der durch ein jeweiliges digitales Zertifikat der delegierten Einheit umfasst ist.

8. Verfahren nach Anspruch 6 oder 7, wobei das Validieren der Tokenschmelztransaktion Folgendes umfasst:
Verifizieren, dass der jeweilige Betrag des digitalen Vermögenswerts, der durch die erste Ausgabe der Tokenschmelztransaktion gesperrt ist, gleich einer Summe aus dem jeweiligen Betrag des digitalen Vermögenswerts ist, der durch die jeweilige Ausgabe der ersten Tokenübertragungstransaktion gesperrt ist, die durch die erste Eingabe der Tokenschmelztransaktion referenziert wird, und einer Transaktionsgebühr, die von einem Blockchain-Knoten erhoben wird, damit die Tokenprägetransaktion auf der Blockchain aufgezeichnet wird.

9. Computerimplementiertes Verfahren zum Durchführen eines Tokenprotokolls unter Verwendung einer Blockchain, wobei jede Tokenübertragungstransaktion eine von einer jeweiligen Partei signierte Eingabe und eine oder mehrere jeweilige Ausgaben erfordert, wobei jede jeweilige Ausgabe einen jeweiligen Betrag eines digitalen Vermögenswerts sperrt und ein jeweiliges Sperrskript umfasst, das an einen jeweiligen öffentlichen Schlüssel einer jeweiligen Partei gebunden ist und einen jeweiligen Tokenbetrag umfasst, und wobei das Verfahren von einer ersten Partei durchgeführt wird und Folgendes umfasst: Initiieren eines Schmelz- und Prägeprotokolls, wobei das Schmelz- und Prägeprotokoll Folgendes umfasst:

Erzeugen einer Tokenschmelztransaktion, wobei die Tokenschmelztransaktion i) eine erste von der ersten Partei signierte Eingabe umfasst, wobei die erste Eingabe eine jeweilige Ausgabe einer ersten Tokenübertragungstransaktion referenziert, die an einen ersten öffentlichen Schlüssel der ersten Partei gebunden ist und einen ersten Tokenbetrag umfasst, und ii) eine erste Ausgabe umfasst, die an einen öffentlichen Schmelzschlüssel einer delegierten Einheit gebunden ist und den ersten Tokenbetrag umfasst;
Veranlassen, dass die Tokenschmelztransaktion an einen oder mehrere Knoten eines Blockchain-Netzwerks übermittelt wird;
Erhalten einer Tokenprägetransaktion, wobei die Tokenprägetransaktion i) eine jeweilige Eingabe umfasst, die von der delegierten Einheit unter Verwendung einer einem Präge-öffentlichen Schlüssel entsprechenden Signatur signiert ist, und ii) eine jeweilige Ausgabe umfasst, die einen jeweiligen Betrag des digitalen Vermögenswerts sperrt, der ausreicht, um eine oder mehrere jeweilige Tokenübertragungstransaktionen zu finanzieren, wobei die jeweilige Ausgabe an einen zweiten öffentlichen Schlüssel der ersten Partei gebunden ist und den ersten Tokenbetrag umfasst.

10. Verfahren nach Anspruch 9, umfassend:

Erzeugen einer zweiten Tokenübertragungstransaktion, wobei die zweite Tokenübertragungstransaktion i) eine zweite von der ersten Partei signierte Eingabe umfasst, wobei die zweite Eingabe die jeweilige Ausgabe der Tokenprägetransaktion referenziert, und ii) eine oder mehrere jeweilige zweite Ausgaben umfasst, wobei jede zweite Ausgabe einen jeweiligen Betrag des digitalen Vermögenswerts sperrt, wobei jede jeweilige zweite Ausgabe ein jeweiliges Sperrskript umfasst, das an einen jeweiligen öffentlichen Schlüssel einer jeweiligen Partei gebunden ist, und einen jeweiligen Tokenbetrag umfasst, wobei eine Summe der jeweiligen Tokenbeträge gleich dem ersten Tokenbetrag ist; und
Veranlassen, dass die zweite Tokenübertragungstransaktion an einen oder mehrere Knoten eines Blockchain-Netzwerks übermittelt wird.

11. Verfahren nach Anspruch 9 oder Anspruch 10, wobei das Initiieren des Schmelz- und Prägeprotokolls Folgendes umfasst:

Anfordern einer Tokenschmelztransaktion von der delegierten Einheit;
Empfangen eines digitalen Zertifikats der delegierten Einheit von der delegierten Einheit, wobei das digitale Zertifikat der delegierten Einheit den öffentlichen Schmelzschlüssel der delegierten Einheit umfasst.

12. Verfahren nach einem der Ansprüche 9 bis 11, wobei die delegierte Einheit Zugriff auf ein digitales Zertifikat der ersten Partei hat, das einen öffentlichen Identitätsschlüssel der ersten Partei umfasst, und wobei das Verfahren Folgendes umfasst:

Erzeugen einer Signatur basierend auf dem digitalen Zertifikat der ersten Partei unter Verwendung eines privaten Schlüssels, der einem temporären öffentlichen Schlüssel entspricht, wobei der temporäre öffentliche Schlüssel auf dem ersten öffentlichen Schlüssel der ersten Partei und dem öffentlichen Identitätsschlüssel der ersten Partei basiert; und
Senden der Signatur an die delegierte Einheit.

13. Verfahren nach einem der Ansprüche 9 bis 12, wobei das Initiieren als Reaktion auf das Bestimmen erfolgt, dass die erste Partei aufgrund eines unzureichenden Betrags des digitalen Vermögenswerts keine nächste Tokenübertragungstransaktion erzeugen kann.

14. Computerausrüstung, umfassend:

einen Speicher, der eine oder mehrere Speichereinheiten umfasst; und
eine Verarbeitungseinrichtung, die eine oder mehrere Verarbeitungseinheiten umfasst, wobei der Speicher Code speichert, der dazu geeignet ist, auf der Verarbeitungseinrichtung ausgeführt zu werden, wobei der Code derart konfiguriert ist, dass er, wenn er sich auf der Verarbeitungseinrichtung befindet, das Verfahren nach einem der Ansprüche 1 bis 13 durchführt.

**15.** Computerprogramm, das auf einem computerlesbaren Speicher verkörpert und derart konfiguriert ist, dass er, wenn er auf einem oder mehreren Prozessoren ausgeführt wird, das Verfahren nach einem der Ansprüche 1 bis 13 durchführt.

**Revendications**

**1.** Procédé, mis en œuvre par ordinateur, d'exécution d'un protocole de jeton au moyen d'une chaîne de blocs, une transaction de transfert de jeton nécessitant une entrée signée par une partie respective et une ou plusieurs sorties respectives, chaque sortie respective verrouillant un montant respectif d'un actif numérique et comprenant un script de verrouillage respectif verrouillé sur une clé publique respective d'une partie respective et comprenant un montant respectif en jetons, et le procédé étant réalisé par une entité déléguée et comprenant :

l'obtention d'une transaction de fusion de jeton, la transaction de fusion de jeton comprenant i) une première entrée signée par une première partie, la première entrée faisant référence à une sortie respective d'une première transaction de transfert de jetons, la sortie respective étant verrouillée sur une première clé publique de la première partie et comprenant un premier montant en jetons, et ii) une première sortie verrouillée sur une clé publique de fusion de l'entité déléguée et comprenant le premier montant en jetons ;
la création d'une transaction de frappe de jeton, ladite transaction comprenant i) une entrée respective signée par l'entité déléguée au moyen d'une signature correspondant à une clé publique de frappe, et ii) une sortie respective verrouillant un montant respectif de l'actif numérique suffisante pour financer une ou plusieurs transactions respectives de transfert de jeton, la sortie respective étant verrouillée sur une seconde clé publique de la première partie et comprenant le premier montant en jetons ; et
le fait d'amener la transaction de frappe de jeton à être soumise à un ou plusieurs nœuds d'un réseau de chaîne de blocs.

**2.** Procédé selon la revendication 1, comprenant :

la réception d'une demande provenant de la première partie pour lancer un protocole de fusion et de frappe ; et
en réponse, l'envoi d'un certificat numérique d'entité déléguée à la première partie, le certificat numérique d'entité déléguée comprenant la clé publique de fusion de l'entité déléguée.

**3.** Procédé selon la revendication 1 ou la revendication 2, ladite création de la transaction de frappe de jeton étant conditionnée par la vérification d'une identité de la première partie.

**4.** Procédé selon la revendication 3, ladite vérification de l'identité de la première partie comprenant :

l'obtention d'un certificat numérique de la première partie comprenant une clé publique d'identité de la première partie ;
la réception, de la part de la première partie, d'une signature basée sur le certificat numérique de la première partie ;
la validation de la signature à l'aide d'une clé publique éphémère obtenue de la première partie ; et
le fait de vérifier que la clé publique d'identification est basée sur la première clé publique de la partie et la clé publique éphémère.

**5.** Procédé selon l'une quelconque des revendications précédentes, ladite création de la transaction de frappe de jeton étant conditionnée par la détermination du fait que la transaction de fusion de jeton fait partie d'une chaîne de transactions de jeton qui remonte jusqu'à une ou plusieurs transactions de frappe de jeton.

**6.** Procédé selon l'une quelconque des revendications précédentes, ladite création de la transaction de frappe de jeton étant conditionnée par la validation de la transaction de fusion de jeton, ladite validation de la transaction de fusion de jeton comprenant :

l'obtention, de la part de la première partie, d'une liste des transactions remontant à une ou plusieurs transactions respectives de frappe de jeton reliant la transaction de fusion de jeton à la transaction respective de frappe de jeton ;
le fait de vérifier qu'il est possible de remonter, à l'aide de la liste de transactions, de la première entrée de la transaction de fusion de jeton jusqu'à une transaction respective de frappe de jeton ; et

le fait de vérifier que le premier montant en jetons compris dans la première sortie de la transaction de fusion de jeton est égal au premier montant en jetons compris dans la sortie respective de la première transaction de transfert.

7. Procédé selon la revendication 6, ladite validation de la transaction de fusion de jeton comprenant :
pour chaque transaction respective de frappe de jeton incluse dans la liste des transactions :

l'obtention d'un certificat numérique d'entité déléguée respectif, le certificat numérique d'entité déléguée comprenant une clé publique de frappe respective de l'entité déléguée respective utilisée pour signer l'entrée respective de la transaction respective de frappe de jeton ; et
le fait de vérifier que la signature respective utilisée pour signer l'entrée respective de la transaction respective de frappe de jeton correspond à une clé publique de frappe respective que comprend un certificat numérique d'entité déléguée respectif.

8. Procédé selon la revendication 6 ou 7, ladite validation de la transaction de fusion de jeton comprenant :
le fait de vérifier que le montant respectif de l'actif numérique verrouillé par la première sortie de la transaction de fusion de jeton est égal à une somme du montant respectif de l'actif numérique verrouillé par la sortie respective de la première transaction de transfert de jeton à laquelle fait référence la première entrée de la transaction de fusion de jeton et d'une taxe de transaction à collecter par un nœud de chaîne de blocs afin que la transaction de frappe de jeton soit enregistrée sur la chaîne de blocs.

9. Procédé, mis en œuvre par ordinateur, d'exécution d'un protocole de jeton à l'aide d'une chaîne de blocs, chaque transaction de transfert de jeton nécessitant une entrée signée par une partie respective et une ou plusieurs sorties respectives, chaque sortie respective verrouillant un montant respectif d'un actif numérique et comprenant un script de verrouillage respectif verrouillé sur une clé publique respective d'une partie respective et comprenant un montant respectif en jetons, le procédé étant réalisé par une première partie et comprenant :
le lancement d'un protocole de fusion et de frappe, le protocole de fusion et de frappe comprenant :

la création d'une transaction de fusion de jeton, la transaction de fusion de jeton comprenant i) une première entrée signée par la première partie, la première entrée faisant référence à une sortie respective d'une première transaction de transfert de jetons verrouillée à une première clé publique de la première partie et comprenant un premier montant en jetons, et ii) une première sortie verrouillée à une clé publique de fusion d'une entité déléguée et comprenant le premier montant en jetons ;
le fait d'amener la transaction de fusion de jeton à être soumise à un ou plusieurs nœuds d'un réseau de chaîne de blocs ;
l'obtention d'une transaction de frappe de jeton, la transaction de frappe de jeton comprenant i) une entrée respective signée par l'entité déléguée au moyen d'une signature correspondant à une clé publique de frappe, et ii) une sortie respective verrouillant un montant respectif de l'actif numérique suffisant pour financer une ou plusieurs transactions respectives de transfert de jeton, la sortie respective étant verrouillée sur une seconde clé publique de la première partie et comprenant le premier montant en jetons.

10. Procédé selon la revendication 9, comprenant :

la création d'une seconde transaction de transfert de jeton, la seconde transaction de transfert de jeton comprenant i) une seconde entrée signée par la première partie, la seconde entrée faisant référence à la sortie respective de la transaction de frappe de jeton, et ii) une ou plusieurs secondes sorties respectives, chaque seconde sortie verrouillant un montant respectif de l'actif numérique, chaque seconde sortie respective comprenant un script de verrouillage respectif verrouillé à une clé publique respective d'une partie respective, et un montant respectif en jetons, une somme des montants respectifs en jetons étant égale au premier montant en jetons ; et
le fait d'amener la transaction de second jeton à être soumise à un ou plusieurs nœuds d'un réseau de chaîne de blocs.

11. Procédé selon la revendication 9 ou la revendication 10, le lancement du protocole de fusion et de frappe comprenant :

le fait de demander une transaction de fusion de jeton à l'entité déléguée ;
la réception d'un certificat numérique d'entité déléguée provenant de l'entité déléguée, le certificat numérique d'entité déléguée comprenant la clé publique de fusion de l'entité déléguée.

**12.** Procédé selon l'une quelconque des revendications 9 à 11, l'entité déléguée ayant accès à un certificat numérique de la première partie comprenant une clé publique d'identité de la première partie, et le procédé comprenant :
la génération d'une signature basée sur le certificat numérique de la première partie au moyen d'une clé privée correspondant à une clé publique éphémère, la clé publique éphémère étant basée sur la première clé publique de la première partie et la clé publique d'identité de la première partie ; et l'envoi de la signature à l'entité déléguée.

**13.** Procédé selon l'une quelconque des revendications 9 à 12, ledit lancement étant effectué en réponse à la détermination du fait que la première partie ne peut pas créer une transaction de transfert de jeton suivante en raison d'un montant insuffisant de l'actif numérique.

**14.** Équipement informatique comprenant :

une mémoire comprenant une ou plusieurs unités de mémoire ; et
un appareil de traitement comprenant une ou plusieurs unités de traitement, la mémoire stockant un code conçu pour s'exécuter sur l'appareil de traitement, le code étant configuré de telle sorte que, lorsqu'il est sur l'appareil de traitement, il réalise le procédé selon l'une quelconque des revendications 1 à 13.

**15.** Programme informatique incorporé sur un stockage lisible par ordinateur et configuré de façon à réaliser, lorsqu'il est exécuté sur un ou plusieurs processeurs, le procédé selon l'une quelconque des revendications 1 à 13.

# Figure 1

# Figure 2

152i

152j

202    $Tx_0$    201                    $Tx_1$    201    203

| TxID₀ | |
|---|---|
| **Input(s)** | **Output(s)** |
| <u>Input</u><br>• Pointer to previous $Tx$<br>• Index of UTXO in previous $Tx$<br>• Unlocking script for unlocking from previous party | <u>$UTXO_0$</u><br>• Amount<br>• Locking script locking to Alice |
| ⋮<br><br>Optional further inputs<br>⋮ | ⋮<br><br>Optional further $UTXO$s<br>⋮ |

203

202

| TxID₁ | |
|---|---|
| **Input(s)** | **Output(s)** |
| <u>Input</u><br>• Pointer to $Tx_0$<br>• Index of $UTXO_0$ [within $Tx_0$]<br>• Unlocking script for unlocking $UTXO_0$ from Alice | <u>$UTXO_1$</u><br>• Amount<br>• Locking script locking to Bob |
| ⋮<br><br>Optional further inputs<br>⋮ | ⋮<br><br>Optional further $UTXO$s<br>⋮ |

Transaction
from Alice to Bob

↓

Validated by running: Locking
script from output 203 of $Tx_0$,
together with Alice's unlocking
script from input 202 of $Tx_1$. This
checks that Alice's unlocking script
in $Tx_1$ meets the condition(s)
defined in the locking script of
previous transaction $Tx_0$.

# Figure 3

300

301

302

106

| Issuer | Delegated Entity | Blockchain Network |

Digital Certificate

Check
Digital
Certificate

Check
Digital
Certificate

Accepted

Create Issuance
Transaction

Send Transaction

Merkle Proof

Send Transaction, Merkle Proof

# Figure 4

400

302

Delegated Entity

106

Blockchain
Network

Mint Tx

Melt Request

Melt Tx

Transfer Tx

Transferor

Transfer Tx

Transferee

401

402

## Figure 5

| TxID_0 | | | |
|---|---|---|---|
| Input List | | Output List | |
| Outpoint | Unlocking Script | Value | Locking Script |
| TxID_mint | Sig(Mint) | s1 sat | [P2PKH Alice] <50 tokens> |
| | | s2 sat | [P2PKH Frank] <50 tokens> |

| TxID_1 | | | |
|---|---|---|---|
| Input List | | Output List | |
| Outpoint | Unlocking Script | Value | Locking Script |
| TxID_0 | Sig(Alice) | s3 sat | [P2PKH Bob] <40 tokens> |
| | | s4 sat | [P2PKH Alice] <10 tokens> |

TxID_2, TxID_3, TxID_4

| TxID_5 | | | |
|---|---|---|---|
| Input List | | Output List | |
| Outpoint | Unlocking Script | Value | Locking Script |
| TxID_4 | Sig(Dave) | sMelt sat | [P2PKH Frank] <40 tokens> |

Melt

| TxID_melt | | | |
|---|---|---|---|
| Input List | | Output List | |
| Outpoint | Unlocking Script | Value | Locking Script |
| TxID_5 | Sig(Frank) | sMint sat | [P2PKH Melt] <40 tokens> |

| TxID_0B | | | |
|---|---|---|---|
| Input List | | Output List | |
| Outpoint | Unlocking Script | Value | Locking Script |
| TxID_mintB | Sig(Mint) | sRemint sat | [P2PKH Frank] <40 tokens> |

# Figure 6

600

106

Blockchain
Network

Transfer Tx

Transferor

Candidate
Transfer Tx

Transferee

401

402

Figure 7

# Figure 8

800

801

106

Trusted Third Party

Transfer Tx →

Blockchain Network

↑ Transfer TX

Transferee

Candidate Transfer Tx ←

Transferor

402

401

Figure 9

Figure 10

Input of TxID_0

Fee_out

Fee_in

UTXOs of TxID_0

UTXOs of TxID_1

UTXOs of TxID_5

UTXOs of TxID_melt